# EUROPEAN PATENT APPLICATION

(11) **EP 4 345 590 A1**
(43) Date of publication of application: **03.04.2024**
(21) Application number: 22863241.0
(22) Date of filing: 23.08.2022
(51) Int. Cl.: G06F 3/0481

(54) **TASK SYNCHRONIZATION SYSTEM AND METHOD, AND DEVICE**

(30) Priority: 28.08.2021 CN 202111000085
(71) Applicant: Huawei Technologies Co., Ltd., Shenzhen, Guangdong 518129 (CN)
(72) Inventor: SHI, Lei, Shenzhen, Guangdong 518129 (CN); ZHANG, Yanan, Shenzhen, Guangdong 518129 (CN)
(74) Representative: Pfenning, Meinig & Partner mbB
(86) International application number: PCT/CN2022/114337
(87) International publication number: WO 2023/030102

(57) **Abstract**

This application discloses a task synchronization system and method, and a related apparatus, applied to a first electronic device and a second electronic device. The first electronic device generates a first task based on a first interface of a first application. The first task may be synchronized to the second electronic device. A first task option corresponding to the first task is displayed on a second application of the second electronic device. The first application and the second application are different applications. In addition, a user may execute the first task on the second electronic device, and does not necessarily execute the first task on the first electronic device. In this way, the user may execute a same task by using different electronic devices. Based on task synchronization between the first electronic device and the second electronic device, a problem that execution of a task cannot be resumed with another electronic device when a task source device is not near the user is resolved.

## Description

This application claims priority to Chinese Patent Application No. 202111000085.X, filed with the China National Intellectual Property Administration on August 28, 2021 and entitled "TASK SYNCHRONIZATION SYSTEM AND METHOD, AND APPARATUS", which is incorporated herein by reference in its entirety.

### TECHNICAL FIELD

This application relates to the field of electronic technologies, and in particular, to a task synchronization system and method, and an apparatus.

### BACKGROUND

In the era of the internet of things, more electronic devices are emerging in users' life. One user probably has a plurality of electronic devices at the same time. Different electronic devices have different advantages in terms of hardware capabilities, and provide different functions. The user usually executes different tasks such as entertainment, communication, and work with a plurality of electronic devices. When the user uses one electronic device to execute a task, if the user halts processing of the task on the electronic device due to some emergencies, the user can only resume processing on the electronic device next time when the user wants to resume processing. However, the user cannot resume processing if the electronic device is not near the user when the user wants to resume processing, or the electronic device does not store the task processed before. This results in poor user experience.

### SUMMARY

Embodiments of this application provide a task synchronization system and method, and an apparatus, to implement cross-device task synchronization, and achieve an effect that a user can process a same task on a plurality of devices.

According to a first aspect, this application provides a task synchronization system, including a first electronic device and a second electronic device. The first electronic device is configured to: display a first interface of a first application; receive a first user operation performed in the first interface; and generate a first task in response to the first user operation. The second electronic device is configured to: obtain the first task; display, in a second application of the second electronic device, a first task option corresponding to the first task, where the second application and the first application are different applications; and display the first interface of the first application when receiving a second user operation performed on the first task option.

In embodiments of this application, a task can be synchronized between the first electronic device and the second electronic device. The first electronic device generates the first task based on the first interface of the first application. The first task may be synchronized to the second electronic device. The first task option corresponding to the first task is displayed on the second application of the second electronic device. The first application and the second application are different applications. For example, the first electronic device generates a video task (the first task) on a video application (the first application), and the video task may be stored in a super favorites application (the second application) of the second electronic device. In addition, the user may execute the first task on the second electronic device, and does not necessarily execute the first task on the first electronic device. In this way, the user may execute a same task by using different electronic devices. Based on task synchronization between the first electronic device and the second electronic device, a problem that execution of a task cannot be resumed with another electronic device when a task source device is not near the user is resolved.

With reference to the first aspect, in some implementations, the second electronic device is further configured to: before displaying, in the second application of the second electronic device, the first task option corresponding to the first task, detect that the first task meets a first preset condition. Herein, the second electronic device performs filtering on the first task based on the first preset condition, and determines whether to synchronize the first task to the second application of the second electronic device. If the first task meets the first preset condition, the second electronic device displays, in the second application, the first task option corresponding to the first task. If the first task does not meet the first preset condition, the second electronic device deletes the first task. In this way, a case in which it is inappropriate for the second electronic device to execute the first task but the first task option is provided for the user can be avoided. This can improve user experience.

In some implementations, the first preset condition includes one or more of the following: A task type of the first task matches a device capability of the second electronic device, in other words, the second electronic device has a capability of processing the first task; an execution application of the first task matches an application already installed on the second electronic device, in other words, an application that can process the first task is installed on the second electronic device; a task resource application of the first task matches an application already installed on the second electronic device, in other words, the task resource application of the first task is installed on the second electronic device; a security attribute of the first task matches a device type of the second electronic device, where the security attribute includes a risk attribute and a privacy attribute; the first electronic device receives a user confirmation instruction for the first task; a trust relationship exists between the task type of the first task and the second electronic device; and a trust relationship exists between a task source device of the first task and the second electronic device. The preset condition further includes other conditions.

With reference to the first aspect, in some implementations, the first electronic device is further configured to: display, in the second application of the first electronic device, the first task option corresponding to the first task; and display the first interface of the first application when receiving a third user operation performed on the first task option. In the foregoing descriptions, after the first electronic device generates the first task, the first electronic device displays, in the second application of the first electronic device, the task option corresponding to the first task, and the user may execute the first task on the first electronic device. In other words, the first task can be executed on the first electronic device and the second electronic device.

With reference to the first aspect, in some implementations, the first electronic device and the second electronic device are in a same distributed database system. The distributed database system includes a distributed database of the first electronic device and a distributed database of the second electronic device. The first electronic device is further configured to: after generating the first task, add the first task to the distributed database of the first electronic device; and synchronize the added first task to the distributed database of the second electronic device based on the distributed database of the first electronic device. In a same distributed database system, data synchronization can be implemented between distributed databases. When data in a distributed database of one electronic device changes, data in a distributed database of another electronic device in the distributed database system changes synchronously. A technical implementation of data synchronization is provided herein, that is, data synchronization between devices (a first electronic device and a second electronic device) is implemented based on a distributed database system.

With reference to the first aspect, in some implementations, the first electronic device communicates with the second electronic device through a third electronic device. The first electronic device is further configured to: after generating the first task, upload the first task to the third electronic device. The third electronic device is configured to synchronize the first task to the second electronic device. A technical implementation of data synchronization is provided herein, that is, data synchronization between devices (a first electronic device and a second electronic device) is implemented based on a third electronic device. The third electronic device may be a cloud server, a third-party server, a background management server, or the like. Optionally, the third electronic device may include a distributed database system.

With reference to the first aspect, in some implementations, the first electronic device is further configured to: receive a notification message of a third application; and generate a second task based on the notification message. The second electronic device is further configured to: obtain the second task; display, in the second application of the second electronic device, a second task option corresponding to the second task; and display an interface corresponding to the notification message when receiving a fourth user operation performed on the second task option. In the foregoing descriptions, the first electronic device may further automatically generate a second task based on the received notification message, synchronize the second task to the second application of the second electronic device, and execute the second task with the second electronic device. A specific manner of generating the task is not limited in this application.

With reference to the first aspect, in some implementations, the second electronic device is further configured to: delete the first task, and delete, from the second application of the second electronic device, the first task option corresponding to the first task. The first electronic device is further configured to: after the second electronic device deletes the first task, delete the first task, and delete, from the second application of the first electronic device, the first task option corresponding to the first task. In the foregoing descriptions, when the second electronic device deletes the first task, the first electronic device also synchronously deletes the first task.

In some implementations, after the second electronic device executes the first task, the second electronic device deletes the first task. The execution of the first task herein may be start of the execution of the first task, or may be completion of the execution of the first task. For example, when the first task is a mail task, and the second electronic device receives an open operation for the mail task, the second electronic device considers that the execution of the first task is completed; or when the second electronic device receives a reply operation for the mail task, the second electronic device considers that the execution of the first task is completed.

In some implementations, after a preset period of time from execution of the first task by the second electronic device, the second electronic device deletes the first task.

According to a second aspect, this application provides a task synchronization method, applied to a first electronic device. The method includes: displaying a first interface of a first application; receiving a first user operation performed in the first interface; generating a first task in response to the first user operation, where the first task is used to display a corresponding first task option in a second application, the first task option is used to trigger display of the first interface of the first application, and the second application and the first application are different applications; and synchronizing the first task to a second electronic device.

In embodiments of this application, a task can be synchronized between the first electronic device and the second electronic device. The first electronic device generates the first task based on the first interface of the first application. The first task may be synchronized to the second electronic device. The first task option corresponding to the first task is displayed on the second application of the second electronic device. The first application and the second application are different applications. For example, the first electronic device generates a video task (the first task) on a video application (the first application), and the video task may be stored in a super favorites application (the second application) of the second electronic device. In addition, the user may execute the first task on the second electronic device, and does not necessarily execute the first task on the first electronic device. In this way, the user may execute a same task by using different electronic devices. Based on task synchronization between the first electronic device and the second electronic device, a problem that execution of a task cannot be resumed with another electronic device when a task source device is not near the user is resolved.

With reference to the second aspect, in some implementations, the method further includes: displaying, in the second application of the first electronic device, the first task option corresponding to the first task; and displaying the first interface of the first application when receiving a user operation performed on the first task option. In the foregoing descriptions, after the first electronic device generates the first task, the first electronic device displays, in the second application of the first electronic device, the task option corresponding to the first task, and the user may execute the first task on the first electronic device. In other words, the first task can be executed on the first electronic device and the second electronic device.

In some implementations, before the displaying, in the second application of the first electronic device, the first task option corresponding to the first task, the method further includes: detecting that the first task meets a second preset condition. Herein, the first electronic device performs filtering on the first task based on the second preset condition, and determines whether to synchronize the first task to the second application of the first electronic device. If the first task meets the second preset condition, the first electronic device displays, in the second application, the first task option corresponding to the first task. If the first task does not meet the first preset condition, the first electronic device deletes the first task. In this way, a case in which it is inappropriate for the first electronic device to execute the first task but the first task option is provided for the user can be avoided. This can improve user experience.

In some implementations, the second preset condition includes one or more of the following: A task type of the first task matches a device capability of the first electronic device, in other words, the first electronic device has a capability of processing the first task; an execution application of the first task matches an application already installed on the first electronic device, in other words, an application that can process the first task is installed on the first electronic device; a task resource application of the first task matches an application already installed on the first electronic device, in other words, the task resource application of the first task is installed on the first electronic device; a security attribute of the first task matches a device type of the first electronic device, where the security attribute includes a risk attribute and a privacy attribute; the first electronic device receives a user confirmation instruction for the first task; a trust relationship exists between the task type of the first task and the first electronic device; and a trust relationship exists between a task source device of the first task and the first electronic device. The preset condition further includes other conditions.

With reference to the second aspect, in some implementations, the first electronic device and the second electronic device are in a same distributed database system. The distributed database system includes a distributed database of the first electronic device and a distributed database of the second electronic device. The synchronizing the first task to a second electronic device includes: adding the first task to the distributed database of the first electronic device; and synchronizing the added first task to the distributed database of the second electronic device based on the distributed database of the first electronic device. In a same distributed database system, data synchronization can be implemented between distributed databases. When data in a distributed database of one electronic device changes, data in a distributed database of another electronic device in the distributed database system changes synchronously. A technical implementation of data synchronization is provided herein, that is, data synchronization between devices (a first electronic device and a second electronic device) is implemented based on a distributed database system.

With reference to the second aspect, in some implementations, the first electronic device communicates with the second electronic device through a third electronic device. The synchronizing the first task to a second electronic device includes: uploading the first task to the third electronic device; and synchronizing the first task to the second electronic device based on the third electronic device. A technical implementation of data synchronization is provided herein, that is, data synchronization between devices (a first electronic device and a second electronic device) is implemented based on a third electronic device. The third electronic device may be a cloud server, a third-party server, a background management server, or the like. Optionally, the third electronic device may include a distributed database system.

With reference to the second aspect, in some implementations, the method further includes: receiving a notification message of a third application; generating a second task based on the notification message, where the second task is used to display a corresponding second task option in the second application, and the second task option is used to trigger display of an interface corresponding to the notification message; and synchronizing the second task to the second electronic device. In the foregoing descriptions, the first electronic device may further automatically generate a second task based on the received notification message, synchronize the second task to the second application of the second electronic device, and execute the second task with the second electronic device. A specific manner of generating the task is not limited in this application.

With reference to the second aspect, in some implementations, after the displaying the first interface of the first application when receiving a user operation performed on the first task option, the method further includes: deleting the first task. One manner of executing the first task includes displaying the first interface of the first application. In the foregoing descriptions, the first electronic device deletes the first task after the first electronic device executes the first task.

In some implementations, after execution of the first task by the first electronic device is completed, the first electronic device deletes the first task. For example, when the first task is a mail task, execution of the first task is completed when a reply operation for the mail task is received. In this case, it is considered that execution of the first task is completed. For another example, when the first task is a video task, execution of the first task is completed when a video playing progress reaches 100%.

In some implementations, after a preset period of time from execution of the first task by the first electronic device, the first electronic device deletes the first task.

With reference to the second aspect, in some implementations, the method further includes: deleting the first task from the distributed database of the first electronic device; and synchronizing the deleted first task to the distributed database of the second electronic device based on the distributed database of the first electronic device. In the foregoing descriptions, when the second electronic device deletes the first task, the first electronic device also synchronously deletes the first task.

According to a third aspect, this application provides a task synchronization method, applied to a second electronic device. The method includes: obtaining a first task, where the first task is generated by a first electronic device based on a first interface of a first application; displaying, in a second application of the second electronic device, a first task option corresponding to the first task, where the second application and the first application are different applications; and displaying the first interface of the first application when receiving a second user operation performed on the first task option.

In embodiments of this application, a task can be synchronized between the first electronic device and the second electronic device. The first electronic device generates the first task based on the first interface of the first application. The first task may be synchronized to the second electronic device. The second electronic device obtains the first task. The first task option corresponding to the first task is displayed on the second application of the second electronic device. The first application and the second application are different applications. For example, the first electronic device generates a video task (the first task) on a video application (the first application), and the video task may be stored in a super favorites application (the second application) of the second electronic device. In addition, the user may execute the first task on the second electronic device, and does not necessarily execute the first task on the first electronic device. In this way, the user may execute a same task by using different electronic devices. Based on task synchronization between the first electronic device and the second electronic device, a problem that execution of a task cannot be resumed with another electronic device when a task source device is not near the user is resolved.

With reference to the third aspect, in some implementations, before the displaying, in a second application of the second electronic device, a first task option corresponding to the first task, the method further includes: detecting that the first task meets a first preset condition. Herein, the second electronic device performs filtering on the first task based on the first preset condition, and determines whether to synchronize the first task to the second application of the second electronic device. If the first task meets the first preset condition, the second electronic device displays, in the second application, the first task option corresponding to the first task. If the first task does not meet the first preset condition, the second electronic device deletes the first task. In this way, a case in which it is inappropriate for the second electronic device to execute the first task but the first task option is provided for the user can be avoided. This can improve user experience.

In some implementations, the first preset condition includes one or more of the following: A task type of the first task matches a device capability of the second electronic device, in other words, the second electronic device has a capability of processing the first task; an execution application of the first task matches an application already installed on the second electronic device, in other words, an application that can process the first task is installed on the second electronic device; a task resource application of the first task matches an application already installed on the second electronic device, in other words, the task resource application of the first task is installed on the second electronic device; a security attribute of the first task matches a device type of the second electronic device, where the security attribute includes a risk attribute and a privacy attribute; the first electronic device receives a user confirmation instruction for the first task; a trust relationship exists between the task type of the first task and the second electronic device; and a trust relationship exists between a task source device of the first task and the second electronic device. The preset condition further includes other conditions.

With reference to the third aspect, in some implementations, the first electronic device and the second electronic device are in a same distributed database system. The distributed database system includes a distributed database of the first electronic device and a distributed database of the second electronic device. The obtaining a first task includes: synchronizing the first task to the distributed database of the second electronic device based on the distributed database of the first electronic device. The first task is added to the distributed database of the first electronic device after the first electronic device generates the first task. In a same distributed database system, data synchronization can be implemented between distributed databases. When data in a distributed database of one electronic device changes, data in a distributed database of another electronic device in the distributed database system changes synchronously. A technical implementation of data synchronization is provided herein, that is, data synchronization between devices (a first electronic device and a second electronic device) is implemented based on a distributed database system.

With reference to the third aspect, in some implementations, the first electronic device communicates with the second electronic device through a third electronic device; and the obtaining a first task includes: obtaining the first task based on the third electronic device, where the third electronic device is configured to synchronize the first task obtained from the first electronic device to the second electronic device. A technical implementation of data synchronization is provided herein, that is, data synchronization between devices (a first electronic device and a second electronic device) is implemented based on a third electronic device. The third electronic device may be a cloud server, a third-party server, a background management server, or the like. Optionally, the third electronic device may include a distributed database system.

With reference to the third aspect, in some implementations, a task monitoring service is registered in the second application of the second electronic device, and the task monitoring service is used to: monitor a change of task data in a local task flow database of the second electronic device, and synchronize the change of the task data in the local task flow database of the second electronic device to the second application of the second electronic device. If the first task meets the first preset condition, the displaying, in a second application of the second electronic device, a first task option corresponding to the first task includes: if the first task meets the first preset condition, storing, by the second electronic device, the first task into a local task flow database of the first electronic device; detecting, based on the task monitoring service, that the first task is written into the local task flow database of the second electronic device; and writing the first task into the second application of the first electronic device, and displaying, in the second application of the second electronic device, the first task option corresponding to the first task. Herein, a manner of data synchronization between a first electronic device and a second electronic device is described. The first electronic device and the second electronic device are in a same distributed database system. The distributed database system includes a distributed database of the first electronic device and a distributed database of the second electronic device. The second electronic device registers the task monitoring service in the first application, where the task monitoring service is used to monitor a change of the task data in the local task flow database of the second electronic device, and synchronize the change of the task data in the local task flow database of the second electronic device to the first application of the second electronic device. The first electronic device adds the first task to the distributed database of the first electronic device, and the distributed database of the first electronic device synchronizes the first task to the distributed database of the second electronic device. The second electronic device writes the first task into the local task flow database of the second electronic device. The data in the local task flow database is changed, and then the second electronic device detects, based on the task monitoring service, that the first task is added to the local task flow database of the second electronic device. The second electronic device writes the first task into the first application of the second electronic device. In this way, task synchronization between the first electronic device and the second electronic device is implemented.

With reference to the third aspect, in some implementations, after the displaying the first interface of the first application when receiving a second user operation performed on the first task option, the method further includes: deleting the first task. One manner of executing the first task includes displaying the first interface of the first application. In the foregoing descriptions, the second electronic device deletes the first task after the second electronic device executes the first task.

In some implementations, after execution of the first task by the second electronic device is completed, the second electronic device deletes the first task. For example, when the first task is a mail task, execution of the first task is completed when a reply operation for the mail task is received. In this case, it is considered that execution of the first task is completed. For another example, when the first task is a video task, execution of the first task is completed when a video playing progress reaches 100%.

In some implementations, after a preset period of time from execution of the first task by the second electronic device, the second electronic device deletes the first task.

With reference to the third aspect, in some implementations, the method further includes: deleting the first task from the distributed database of the second electronic device; and synchronizing the deleted first task to the distributed database of the first electronic device based on the distributed database of the second electronic device. In the foregoing descriptions, when the second electronic device deletes the first task, the first electronic device also synchronously deletes the first task.

According to a fourth aspect, an embodiment of this application provides an electronic device, including one or more processors and one or more memories. The one or more memories are coupled to the one or more processors. The one or more memories are configured to store computer program code. The computer program code includes computer instructions. When the computer instructions are run on the processor, the electronic device is enabled to perform the task synchronization method in any possible implementation of any one of the foregoing aspects.

According to a fifth aspect, an embodiment of this application provides a computer storage medium, including computer instructions. When the computer instructions are run on an electronic device, a communication apparatus is enabled to perform the task synchronization method in any possible implementation of any one of the foregoing aspects.

According to a sixth aspect, an embodiment of this application provides a computer program product. When the computer program product is run on a computer, the computer is enabled to perform the task synchronization method according to any possible implementation of any one of the foregoing aspects.

### BRIEF DESCRIPTION OF DRAWINGS

FIG. 1a is a schematic diagram of a system architecture according to an embodiment of this application;
FIG. 1b is a schematic diagram of another system architecture according to an embodiment of this application;
FIG. 2a and FIG. 2b are a schematic diagram of a group of application interfaces according to an embodiment of this application;
FIG. 3a is a schematic diagram of a hardware structure of an electronic device according to an embodiment of this application;
FIG. 3b is a schematic diagram of a software structure of an electronic device according to an embodiment of this application;
FIG. 4a to FIG. 4k are a schematic diagram of another group of application interfaces according to an embodiment of this application;
FIG. 5a to FIG. 5c are a schematic diagram of another group of application interfaces according to an embodiment of this application;
FIG. 6a to FIG. 6d are a schematic diagram of another group of application interfaces according to an embodiment of this application;
FIG. 7a to FIG. 7f are a schematic diagram of another group of application interfaces according to an embodiment of this application;
FIG. 8a to FIG. 8g are a schematic diagram of another group of application interfaces according to an embodiment of this application;
FIG. 9a to FIG. 9c are a schematic diagram of another group of application interfaces according to an embodiment of this application; and
FIG. 10A and FIG. 10B are a flowchart of a task synchronization method according to an embodiment of this application.

### DESCRIPTION OF EMBODIMENTS

The following describes technical solutions in embodiments of this application with reference to accompanying drawings. In the descriptions of embodiments of this application, "/" means "or" unless otherwise specified. For example, A/B may represent A or B. In the descriptions, "and/or" describes only an association relationship for describing associated objects and represents that three relationships may exist. For example, A and/or B may represent the following three cases: Only A exists, both A and B exist, and only B exists. In addition, in the descriptions of embodiment of this application, "a plurality of" means two or more.

The following terms "first" and "second" are merely used for description, and shall not be understood as an indication or implication of relative importance or implicit indication of a quantity of indicated technical features. Therefore, features limited by "first" and "second" may explicitly or implicitly include one or more of the features. In the descriptions of the embodiments of this application, unless otherwise specified, "a plurality of" means two or more. The terms "middle", "left", "right", "up", "down", and the like indicate an orientation or a location relationship based on an orientation or a location relationship shown in the accompanying drawings, and are merely intended to facilitate and simplify descriptions of this application. The terms do not indicate or imply that a specified apparatus or element needs to have a specific orientation and be constructed and operated in a specific orientation. Therefore, the terms cannot be understood as a limitation on this application.

In some scenarios, a user is browsing news with a tablet, but the user needs to pause browsing for some reasons. In this case, the user may first retain the news page on the tablet, and then resume browsing the news on the tablet when the user is free. However, if the tablet is not near the user when the user is free, the user cannot resume browsing.

In some other scenarios, a user is watching a video with a mobile phone. In this case, the mobile phone receives a new message. If the user wants to view the new information, the user needs to pause and exit watching the video on the mobile phone, and then open and view the new message. After processing the new message, the user exits a message application and restarts a video application to watch the video. In this case, video watching of the user is interrupted. This results in poor user experience.

For the foregoing example scenarios, this application provides a task synchronization method. According to the method, a task flow can be synchronized between a plurality of devices. In other words, an electronic device may synchronize a to-be-processed task to another device, and the task is processed with the another device. In this way, the problem that the user cannot resume browsing the news when the tablet is not near the user in the foregoing scenario can be resolved. To be specific, the tablet may synchronize the news page to another electronic device (for example, a mobile phone or a watch). When the user is free, the user can conveniently resume browsing the news page with a device at hand, and the user does not need to resume browsing on the tablet. In this way, user experience can be improved. In addition, the problem that the user needs to interrupt video watching to view the new message in the foregoing scenario can be resolved. The mobile phone may synchronize the new message to another electronic device (for example, a tablet, a large screen, or a watch), and the user may view the new message with another electronic device without interrupting video watching on the mobile phone. In this way, user experience can be improved.

In some embodiments, the electronic device may implement task flow synchronization between a plurality of devices based on a distributed database system (Distributed DataBase System, DDBS). The distributed database system includes a distributed database management system (Distributed DataBase Management System, DDBMS) and a distributed database (Distributed DataBase, DDB). The distributed database is a logically unified database formed by a plurality of physically dispersed distributed databases that are connected by a computer network. The distributed database management system is a logically unified database management system formed by a plurality of physically dispersed database management systems that are connected by a computer network.

In the distributed database system, an application may perform a transparent operation on the distributed database. Data in the distributed database may be separately stored in distributed databases of different electronic devices, may be managed by different database management systems (DataBase Management Systems, DBMSs), may be run on different electronic devices, may be supported by different operating systems, and may be connected together by different communication networks.

When data in one of the distributed databases is changed, the changed data is synchronized to all distributed databases in the distributed database system. In this case, a task released by any of devices in a same distributed database system is synchronized to all other devices in the system. If any device processes or deletes the task, all other devices in the system delete the task from respective databases.

Optionally, the distributed database includes a callback function for data change. When data in a distributed database is changed, the distributed database calls back the changed data to another distributed database in the distributed database system based on a callback function for data change.

The following first describes a system architecture in embodiments of this application.

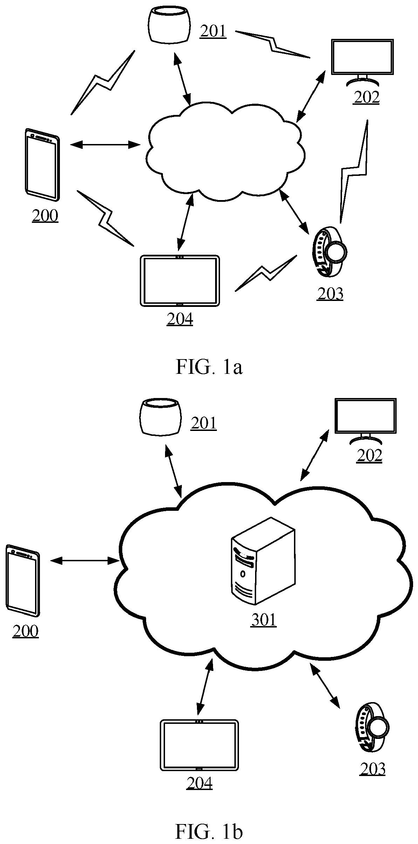

FIG. 1a is an example system diagram according to this application. As shown in FIG. 1a, the system includes a plurality of electronic devices, for example, an electronic device 200, an electronic device 201, an electronic device 202, an electronic device 203, and an electronic device 204. Each electronic device in the system may establish a network (namely, networking) according to a specific communication protocol and a networking policy, so that the electronic devices in the system can communicate with each other. For example, the electronic devices in the system may be connected in a manner of wireless communication. For example, the connection may be established in at least one of the following manners of wireless connection: Bluetooth (Bluetooth, BT), near field communication (near field communication, NFC), wireless fidelity (wireless fidelity, Wi-Fi), or Wi-Fi Direct.

A type of an electronic device (for example, the electronic device 200, the electronic device 201, the electronic device 202, the electronic device 203, or the electronic device 204) is not specifically limited in embodiments of this application. In some embodiments, the electronic device in this embodiment of this application may be a device like a mobile phone, a wearable device (for example, a smart band, a smartwatch, a headset, or the like), a tablet computer, a laptop (laptop), a handheld computer, a notebook computer, an ultra-mobile personal computer (ultra-mobile personal computer, UMPC), a cellular phone, a personal digital assistant (personal digital assistant, PDA), an augmented reality (augmented reality, AR) device/a virtual reality (virtual reality, VR) device, a television, a large screen, a stereo, a television, a refrigerator, an air conditioner, a vehicle-mounted device, a printer, or a projector. An example embodiment of the electronic device includes but is not limited to an electronic device using iOS^{®}, Android^{®}, Microsoft^{®}, Harmony, or another operating system.

In some embodiments, the electronic device 200, the electronic device 201, the electronic device 202, the electronic device 203, and the electronic device 204 may be connected to a local area network (local area network, LAN) through wired connection or wireless fidelity (wireless fidelity, Wi-Fi) connection. The electronic device 200, the electronic device 201, the electronic device 202, the electronic device 203, and the electronic device 204 communicate with each other through the local area network. The electronic device 200, the electronic device 201, the electronic device 202, the electronic device 203, and the electronic device 204 may communicate with each other through a third-party device in the local area network. The third-party device is, for example, a router, a gateway, or a smart device controller.

In some embodiments, each of the electronic device 200, the electronic device 201, the electronic device 202, the electronic device 203, and the electronic device 204 includes a distributed database. The distributed database and a database management system that are carried in each of the electronic device 200, the electronic device 201, the electronic device 202, the electronic device 203, and the electronic device 204 form a distributed database system. Data in the distributed database may be separately stored in different distributed databases, may be managed by different database management systems, may be run on different electronic devices, may be supported by different operating systems, and may be connected together by different communication networks. Task data in a local task flow database may be written into the distributed database, so as to be synchronized to a distributed database of another device. When any electronic device (the electronic device 200, the electronic device 201, the electronic device 202, the electronic device 203, and the electronic device 204) updates data in a distributed database of the electronic device, update data is synchronized in distributed databases of all other devices.

FIG. 1b is another example system diagram according to this application. As shown in FIG. 1b, a system includes a plurality of electronic devices. The foregoing electronic device 200, electronic device 201, electronic device 202, electronic device 203, electronic device 204, and the like are used as examples. The electronic device 200, the electronic device 201, the electronic device 202, the electronic device 203, and the electronic device 204 are all connected to a same electronic device 301. The electronic device 200, the electronic device 201, the electronic device 202, the electronic device 203, and the electronic device 204 may indirectly communicate with each other through the electronic device 301.

The electronic device 301 may be a server that provides various services, for example, a cloud server, a third-party server, a background server, and a data server. The electronic device 301 may provide support for a database that the electronic device 200, the electronic device 201, the electronic device 202, the electronic device 203, or the electronic device 204 requests to operate.

Optionally, the electronic device 301 includes a distributed database system. The distributed database system includes a distributed database and a database management system. When data in the distributed database is changed, the electronic device 301 may synchronize the changed data to an electronic device (the electronic device 200, the electronic device 201, the electronic device 202, the electronic device 203, or the electronic device 204) in a network based on a data callback function. The electronic device in the network may upload data to the electronic device 301. Optionally, the electronic device 301 may perform processing such as analysis on the received data, and feed back a processing result (for example, whether to synchronize the data to an electronic device) to an electronic device.

A user may use the electronic device 200, the electronic device 201, the electronic device 202, the electronic device 203, and the electronic device 204 to interact with the electronic device 301 through the network for data receiving or sending and the like. For example, based on a client on the electronic device 200, first data is sent to the electronic device 301 through the network, and the electronic device 202, the electronic device 203, and the electronic device 204 may obtain the first data from the electronic device 301 through the network. Various communication client applications such as a database client (for example, a super favorites application mentioned below in this application) may be installed on the electronic device 200, the electronic device 201, the electronic device 202, the electronic device 203, and the electronic device 204.

It may be understood that the structure shown in this embodiment of this application does not constitute a specific limitation on the system architecture. In some other embodiments of this application, the system architecture may include more or fewer devices than those shown in the figure.

Based on the system architecture diagrams shown in FIG. 1a and FIG. 1b, in a possible implementation, during communication between the electronic device 200, the electronic device 201, the electronic device 202, the electronic device 203, and the electronic device 204, trust relationships between the electronic devices need to be verified or established, to provide support for subsequent data synchronization.

In some embodiments, the electronic device 200 may find, through a mobile network or the Internet, that a login account of one or more other devices is an account of the electronic device 200, or the login account of the one or more other devices is an associated account of the login account of the electronic device 200. In this case, a trust relationship exists between the one or more other devices and the electronic device 200. The one or more other devices include the electronic device 201, the electronic device 202, the electronic device 203, or the electronic device 204. Devices to which a same account is logged in or associated accounts are logged in can obtain device information about each other to implement data communication. The associated account may be an account authorized by a same account.

The foregoing account may be an account provided by a cloud server provider for a user, for example, a Huawei account, or may be an account used to log in to an application, for example, accounts of various types of communication software or an account of payment software.

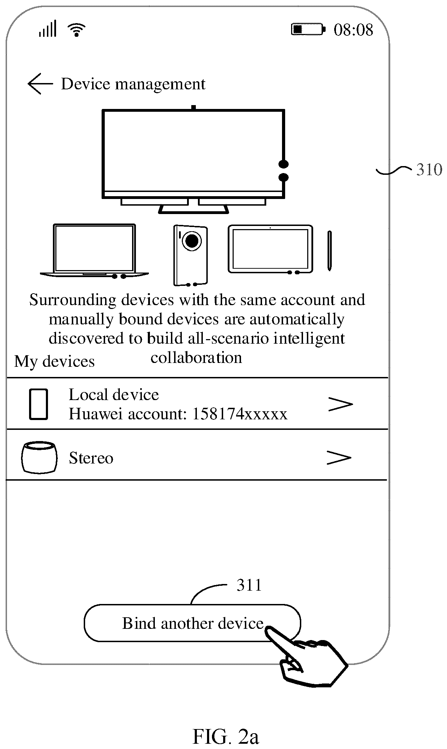

In some embodiments, a trust relationship between electronic devices may be established in a manner of manual addition, including manners of tapping, scanning, and the like. For example, as shown in FIG. 2a, the user may access a device management interface 310 from a setting application, and the device management interface 310 may include a list named "My devices". "My devices" includes a local device and a stereo. A same account (for example, a same Huawei account) may be logged in to the local device and the stereo. Alternatively, the local device and the stereo may be devices to which different accounts that are authenticated and bounded are logged in.

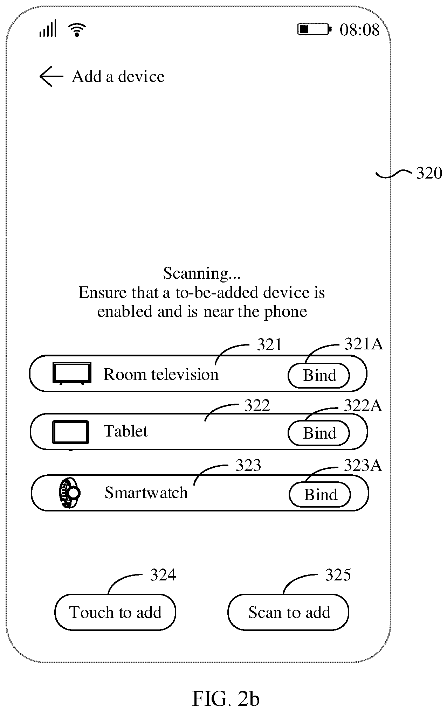

Optionally, the device management interface 310 may include a "Bind another device" button 311. In this embodiment of this application, binding means that a trust relationship is established between two devices, so that an operation like data synchronization between the devices can be performed. In response to an operation (for example, a tap operation) performed by a user on the "Bind another device" button 311, a device binding interface 320 shown in FIG. 2b is displayed. The device binding interface 320 includes a list of available devices found through scanning, and the user may select a to-be-bound device from the list of available devices. A room television 321, a tablet 322, and a smartwatch 323 shown in FIG. 2b are used as examples. When the electronic device is to establish a binding relationship with the room television 321, the tablet 322, or the smartwatch 323, a tap may be directly performed on a "Bind" button 321A corresponding to the room television 321, a "Bind" button 322A corresponding to the tablet 322, or a "Bind" button 323A corresponding to the smartwatch 323, to bind the room television 321, the tablet 322, or the smartwatch 323.

Optionally, the device binding interface 320 further includes a "Touch to add" button 324 and a "Scan to add" button 325, which are used to bind an electronic device that is not found through scanning performed by the electronic device. For example, in response to a user operation on the "Touch to add" button 324, the electronic device enables NFC, and taps an ontag on another device from a back side. In this way, another device can be bound. In response to a user operation on the "Scan to add" button 325, the electronic device scans a two-dimensional code of another device. In this way, another device can be bound.

It should be understood that locations, names, shapes, and the like of elements (for example, buttons, icons, and texts) in the UI interfaces respectively corresponding to FIG. 2a and FIG. 2b are not fixed, and may be combined or designed according to a requirement. For example, the button 311 in FIG. 2a may be replaced with the button 324 or the button 325 in FIG. 2b.

It should be noted that the solutions for implementing embodiments of this application by implementing mutual communication between devices may be based on a same network; or may be based on a trust relationship between devices, for example, a common account, associated accounts, or a binding relationship; or may be based on a same network and a trust relationship. This is not limited in this application.

The following uses the electronic device 100 as an example to describe electronic devices (the electronic device 100 includes an electronic device 200, an electronic device 201, an electronic device 202, an electronic device 203, an electronic device 204, and the like) in the embodiments of this application.

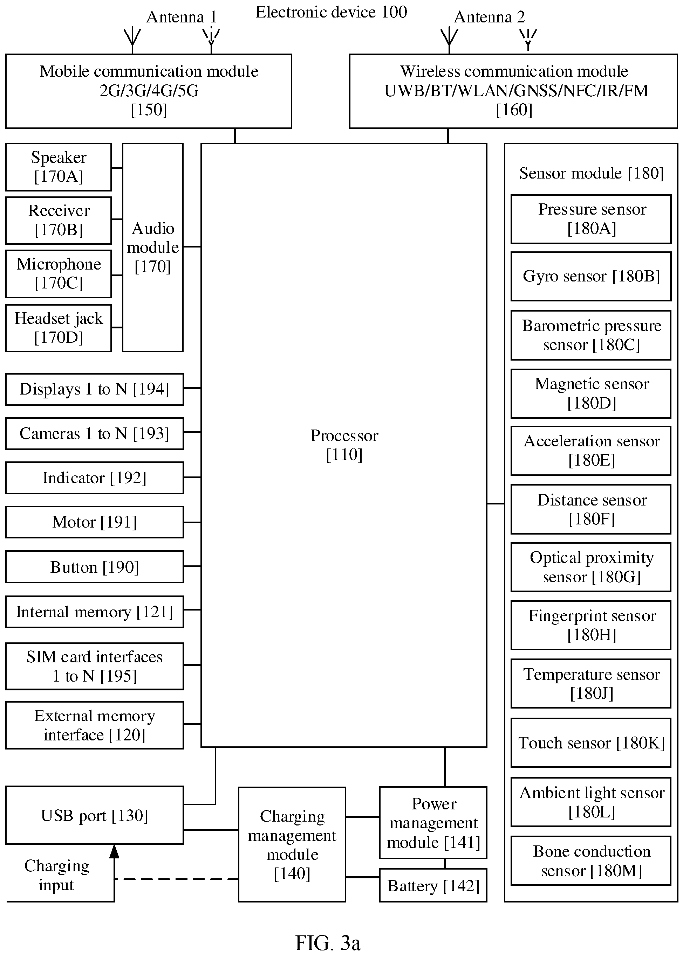

FIG. 3a is a schematic diagram of a structure of an electronic device 100 according to an embodiment of this application.

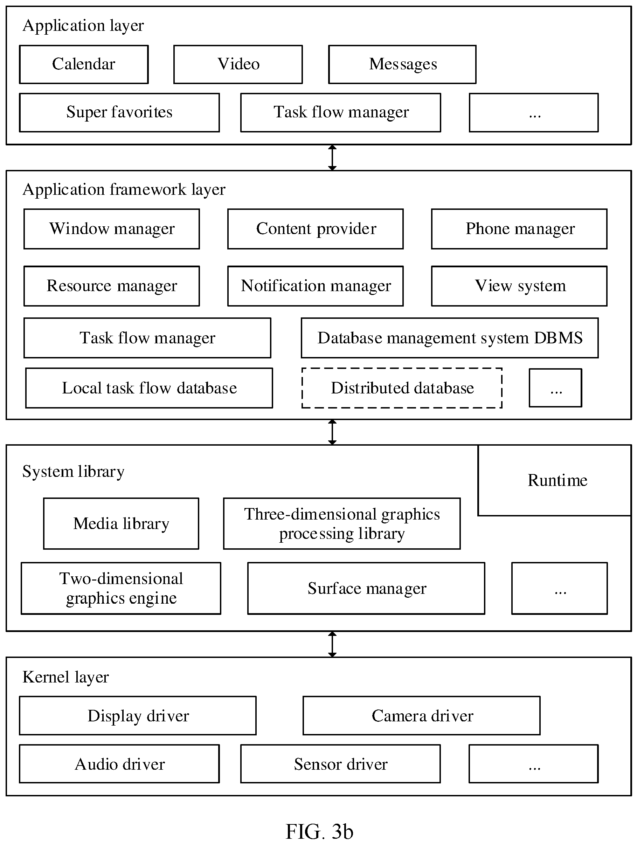

As shown in FIG. 3 a, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components are split, or different component arrangements are used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store an instruction or data that has been used or that is cyclically used by the processor 110. If the processor 110 needs to use the instruction or the data again, the processor may directly invoke the instruction or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call with a Bluetooth headset.

The PCM interface may also be used for audio communication, and analog signal sampling, quantization, and coding. In some embodiments, the audio module 170 may be coupled to the wireless communication module 160 through the PCM bus interface. In some embodiments, the audio module 170 may alternatively transfer an audio signal to the wireless communication module 160 through the PCM interface, to implement a function of answering a call with the Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music with the Bluetooth headset.

The MIPI interface may be configured to connect the processor 110 to peripheral components such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI, or the like.

The USB port 130 is a port that conforms to a USB standard specification, and may be specifically a mini USB port, a micro USB port, a USB Type C port, or the like. The USB port 130 may be configured to connect to a charger to charge the electronic device 100, or may be configured to transmit data between the electronic device 100 and a peripheral device, or may be configured to connect to a headset, to play an audio by using a headset. The port may be further configured to connect to another electronic device like an AR device.

It may be understood that the interface connection relationships between the modules in this embodiment of this application are merely examples for description, and do not constitute a limitation on the structure of the electronic device 100. In some other embodiments of this application, the electronic device 100 may alternatively use an interface connection manner different from those in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 when charging the battery 142.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be configured to monitor parameters such as a battery capacity, a battery cycle count, and battery health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution that is for wireless communication including 2G, 3G, 4G, 5G, or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then the demodulator transmits the low frequency baseband signal obtained through demodulation to the baseband processor for processing. The low frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and the modem processor and the mobile communication module 150 or another functional module may be disposed in a same device.

The wireless communication module 160 may provide a wireless communication solution that is applied to the electronic device 100 and that includes UWB, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processor module. The wireless communication module 160 receives an electromagnetic wave through the antenna 2, performs processing like frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include technologies such as a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, and/or IR. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function by using the GPU, the display 194, the application processor, and the like. The GPU is a microprocessor for image processing, and is connected to the display 194 and the application processor. The GPU is used for mathematical and geometric computation and image rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In some embodiments of this application, the display 194 displays interface content currently output by a system. For example, the interface content is an interface provided by an instant messaging application.

The electronic device 100 may implement a photographing function by using the ISP, the camera 193, the video codec, the GPU, the display 194, the application processor, and the like.

The ISP is configured to process data fed back by the camera 193. For example, during photographing, when a shutter is open, light is transmitted to a photosensitive element of the camera through a lens. An optical signal is converted into an electrical signal. The photosensitive element of the camera transmits the electrical signal to the ISP for processing, and converts the electrical signal into a visible image. The ISP may further perform algorithm optimization on noise, luminance, and complexion of an image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, so that the electrical signal is converted into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process other digital signals other than the digital image signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and can continuously perform self-learning. Applications such as intelligent cognition of the electronic device 100, for example, image recognition, facial recognition, speech recognition, and text understanding, may be implemented through the NPU.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 executes various function applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (like audio data and contacts) and the like created during use of the electronic device 100. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement audio functions, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode audio signals. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C by moving the mouth, to input a sound signal to the microphone 170C. At least one microphone 170C is disposed in the electronic device 100. In some other embodiments, two microphones 170C may be disposed in the electronic device 100, to collect a sound signal and further implement a noise cancellation function. In some other embodiments, three, four, or more microphones 170C may be disposed in the electronic device 100, to collect a sound signal, implement noise cancellation, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. In some optional embodiments of this application, the pressure sensor 180A may be configured to: capture a pressure value generated when a finger part of the user touches the display, and transmit the pressure value to the processor, so that the processor identifies a finger part with which the user enters the user operation.

There are a plurality of types of pressure sensors 180A, such as a resistive pressure sensor, an inductive pressure sensor, and a capacitive pressure sensor. The capacitive pressure sensor may include at least two parallel plates including conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may calculate a touch location based on a detection signal of the pressure sensor 180A. In some embodiments, different touch locations may correspond to different operation instructions. In some optional embodiments, the pressure sensor 180A may further calculate a quantity of touch points based on a detected signal, and transmit a calculated value to the processor, so that the processor recognizes that the user enters a user operation by using a single finger or a plurality of fingers.

The gyro sensor 180B may be configured to determine a motion posture of the electronic device 100. In some embodiments, an angular velocity of the electronic device 100 around three axes (that is, axes x, y, and z of the electronic device) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which the lens module needs to compensate, and allows the lens to cancel jitter of the electronic device 100 through reverse motion, to implement image stabilization. The gyro sensor 180B may be further used in a navigation scenario and a motion-sensing gaming scenario.

The barometric pressure sensor 180C is configured to measure barometric pressure. In some embodiments, the electronic device 100 calculates an altitude based on a value of a barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell, the electronic device 100 may detect opening and closing of a flip cover based on the magnetic sensor 180D. Further, a feature like automatic unlocking upon opening is set based on a detected opening or closing state of the flip cover or a clamshell.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in applications such as switch between a landscape mode and a portrait mode or a pedometer. In some optional embodiments of this application, the acceleration sensor 180E may be configured to: capture an acceleration value generated when a finger part of the user touches the display (or the finger of the user taps a tail edge of a back housing of the electronic device 100), and transmit the acceleration value to the processor, so that the processor identifies a finger part with which the user enters the user operation.

The distance sensor 180F is configured to measure a distance. The electronic device 100 may measure a distance by using infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using a photodiode. When sufficient reflected light is detected, it can be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a flip cover mode or a pocket mode to automatically unlock or lock the screen.

The ambient light sensor 180L is configured to sense ambient light brightness. The electronic device 100 may adaptively adjust brightness of the display 194 based on sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from abnormal shutdown caused by a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is referred to as a "touch screen". The touch sensor 180K is configured to detect a touch operation performed on or near the touch sensor 180K. The touch operation is an operation of touching the display 194 with a hand, an elbow, a stylus, or the like of a user. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input to generate a button signal input related to user settings and functional control of the electronic device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100.

The specific descriptions of the hardware structure of the electronic device 100 are applicable to the descriptions of the hardware structures of the electronic device 200, the electronic device 201, the electronic device 202, the electronic device 203, and the electronic device 204.

FIG. 3b is a block diagram of a software structure of the electronic device 100 according to an embodiment of this application.

Software is divided into several layers based on the layered architecture, and the layers implements respective functions. The layers communicate with each other through software interfaces. In some embodiments, the Android system is divided into five layers: an application layer, an application framework layer, an Android runtime (Android runtime) and system library, a hard abstraction layer (hard abstraction layer, HAL) (which is not shown in FIG. 3b), and a kernel layer from top to bottom.

The application layer may include various application packages.

As shown in FIG. 3b, the application packages may include applications such as Camera, Gallery, Calendar, Calls, Map, Navigation, WLAN, Bluetooth, Music, Video, Game, Shopping, Travel, and Instant Messaging (for example, Messages). In addition, the application package may further include system applications such as Home screen (that is, Home), Leftmost screen, Control center, and Notification center. In embodiments of this application, the application package may further include super favorites application, and the super favorites application may be a system application or a third-party application. The application package may further include an application of the task flow manager, which is configured to invoke and manage the task flow manager.

The super favorites application provides a service or function, and may support the electronic device 100 in adding task data to a distributed database, and another electronic device synchronizes the task data to a local task flow database of the another electronic device based on the distributed database.

The application framework layer provides an application programming interface (application programming interface, API) and a programming framework for an application at the application layer. The application framework layer includes some predefined functions.

As shown in FIG. 3b, the application framework layer may include a task flow manager, a database management system DBMS, a local task flow database, a distributed database, an input manager, a window manager (window manager), a content provider, a view system, a phone manager, a resource manager, a notification manager, a display manager, an activity manager (activity manager), and the like.

The task flow manager is configured to manage task flows in applications, generate task data, and publish a task.

The database management system DBMS is software for operating and managing databases (including a local task flow database, a distributed database, and the like). It is used for database establishment, database use, and database maintenance, including database interface invocation. The DBMS performs unified management and control on databases to ensure security and integrity of the databases. A user accesses data in the database through the DBMS, and a database administrator maintains the database through the DBMS. The DBMS provides various functions to enable various applications and users to create, modify, and query the database at the same time or at different times in different ways. The DBMS enables the user to conveniently define and manipulate data, maintains data security and integrity, and performs concurrent control by a plurality of users and database recovery.

A local task flow database stores local task data.

A distributed database is a logically unified database formed by a plurality of physically dispersed database units that are connected by a computer network. Each connected database unit is referred to as a site or node. The distributed databases are managed by a unified database management system, which is referred to as a distributed database management system.

In some embodiments, the distributed database is an optional module in the electronic device 100, and the distributed database of the electronic device 100 may be carried on another server or a cloud.

In embodiments of this application, the super favorites application of the electronic device 100 invokes a client of the task flow manager (an application of the task flow manager) to register a task monitoring service with the local task flow database. The client of the task flow manager invokes an interface of the database management system DBMS to register the task monitoring service with the task flow manager. The task monitoring service is used to: when the task flow manager detects that task data in the local task flow database is changed (for example, added, deleted, or changed), the task flow manager synchronizes changed task data to the super favorites application.

The input manager is configured to receive an instruction or a request reported by a lower layer like the kernel layer or the hardware abstraction layer.

The window manager is configured to manage a window program. The window manager may obtain a size of a display, determine whether there is a status bar, perform screen locking, take a screenshot, and the like.

The activity manager is used to manage information and the like of activities that are running in the system, including a process (process), an application, a service (service), and a task (task).

The content provider is configured to store and obtain data, and make the data accessible to the application. The data may include a video, an image, audio, calls that are made and answered, a browsing history and bookmarks, contacts, and the like.

The view system includes visual controls such as a control for displaying a text and a control for displaying a picture. The view system may be configured to construct an application. A display interface of an application may include one or more views. For example, a display interface including an SMS message notification icon may include a view displaying a text and a view displaying a picture.

The display manager is configured to transfer display content to the kernel layer.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be used to convey a message of a notification type. The message may automatically disappear after a short stay without user interaction. For example, the notification manager is configured to indicate download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, an alert sound is played, the electronic device vibrates, or an indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run in the virtual machine. The virtual machine executes Java files of the application layer and the application framework layer to obtain binary files. The virtual machine is configured to implement functions such as object lifecycle management, stack management, thread management, security and exception management, and garbage collection.

The system library may include a plurality of functional modules, such as a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, static image files, and the like. The media library can support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The hardware abstraction layer HAL is an interface layer between operating system software and a hardware component, and provides an interface for interaction between upper-layer software and lower-layer hardware. The HAL abstracts bottom-layer hardware as software that includes a corresponding hardware interface. Setting of a bottom-layer hardware device can be implemented by accessing the HAL. For example, a related hardware component may be enabled or disabled at the HAL. In some embodiments, a core architecture of the HAL includes at least one of C++ or C.

The kernel layer is a layer between hardware and software. The kernel layer includes at least a display driver, a camera driver, an audio driver, a sensor driver, a touch chip driver, an input (input) system, and the like. For ease of description, FIG. 3b shows an example in which the kernel layer includes an input system, a touch chip driver, a display driver, and a storage driver. The display driver and the storage driver both may be disposed in a driver module.

It may be understood that the structure shown in this embodiment of this application does not constitute a specific limitation on the electronic device 100. In some other embodiments, the electronic device 100 may include more or fewer components than those shown in the figure, or some components may be combined, or some components are split, or a different component arrangement may be used. The components shown in the figure may be implemented by using hardware, software, or a combination of software and hardware.

With reference to an application scenario, the following describes an implementation of a task synchronization method provided in this application in a display interface.

First, an example in which the electronic device 100 is a smartphone is used to describe an example displayed application interface of a super favorites application of the electronic device 100.

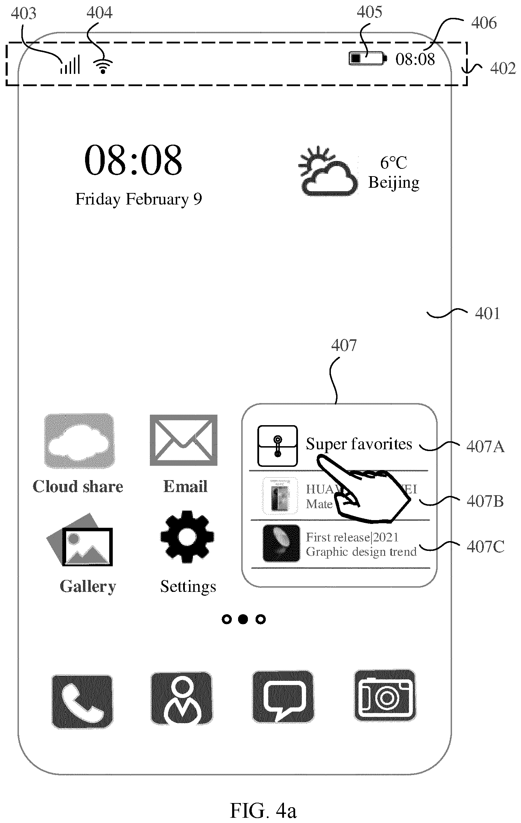

FIG. 4a shows an example user interface 401 used to display an application list on the electronic device 100. The user interface 401 includes a status bar 402 and a plurality of application icons.

The status bar 402 may include one or more signal strength indicators 403 of a mobile communication signal (which may also be referred to as a cellular signal), one or more signal strength indicators 404 of a wireless fidelity (wireless fidelity, Wi-Fi) signal, a battery status indicator 405, a time indicator 406, and the like.

The display interface 402 displays a plurality of application icons, for example, application icons corresponding to applications such as Cloud share, Email, Gallery, and Settings. The user interface 401 further includes a widget 407 corresponding to the super favorites application. Optionally, a display form of the super favorites application may be an application icon, or may be a widget, a window, a floating component, or the like.

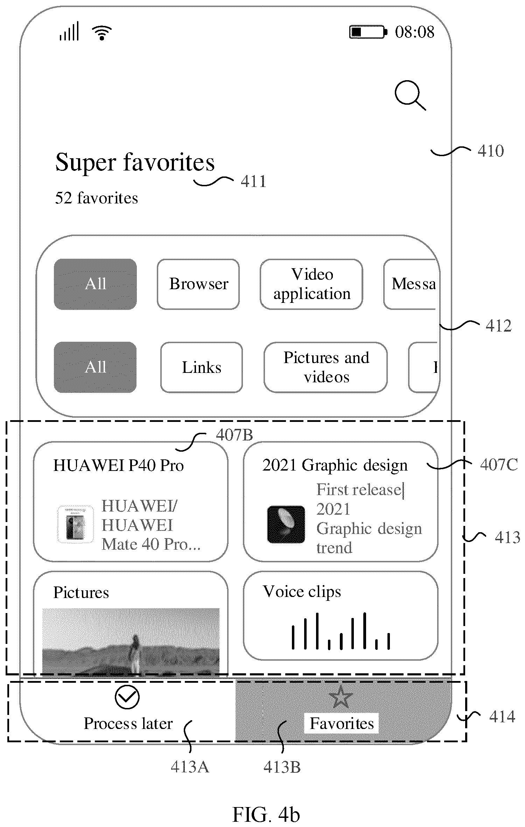

In FIG. 4a, the widget 407 displays a start control of the super favorites and a task option of some content in the super favorites, for example, includes a start control 407A, a task option 407B, and a task option 407C. When the electronic device 100 receives a user operation performed on the start control 407A, the electronic device 100 displays an application interface provided by the super favorites (for example, the interface shown in FIG. 4b). When the electronic device 100 receives a user operation performed on the task option 407B or the task option 407C, the electronic device 100 displays a corresponding application interface.

FIG. 4b shows an example application interface 410 of the super favorites application. The application interface 410 includes a title bar 411, a task type selection bar 412, a task list area 413, and a page menu 414.

The title bar 411 indicates that a current page is a "Favorites" page. For example, the super favorites application includes 52 favorites tasks.

One or more task options are displayed in the task list area 413. Each task option corresponds to one task that is collected by the electronic device 100, and tasks may come from different applications. Data of a task may include task data and a task attribute. The task attribute includes a task type, a task source application, a task execution progress, a task execution application, a task reminder time, and the like.

The task type of a task displayed in the task list area 413 is a task type selected in the task type selection bar 413. For example, the task list area 413 includes a task option 407B, a task option 407C, and another task option, and the user may slide in the task list area 413 to view more task options. When the electronic device 100 receives a user operation performed on any task option in the task list area 413, the electronic device 100 displays a specific application interface corresponding to the task option. Based on any task option, the electronic device 100 may execute a task corresponding to the task option in the super favorites application, or may jump to another application to execute the task corresponding to the task option.

The task type selection bar 412 lists task types related to tasks in the super favorites application. For example, the task types may be classified based on a task source application and a task data type. The task source application includes a browser, a video application, a communication application, a music application, and the like. The task data type includes a link, a picture, a video, a file, an audio, and the like. A task type selected by a user in the task type selection bar 412 determines a task displayed in the task list area 413. If a selection of a task type made by the user in the task type selection bar 412 is that the task source is the browser, a task displayed in the task list area 413 is a task from the browser. If the selection of the task type made by the user in the task type selection bar 413 is that task data includes a picture, the task displayed in the task list area 413 is a task including picture data.

Optionally, the user may select a plurality of task types, that is, tasks of a plurality of task types may be displayed in the task list area 413.

The page menu 414 includes two page options: a "Process later" option 413A and a "Favorites" option 413B. Each page option corresponds to a page. If the current "Favorites" option 413B is marked, it indicates that a current page is a "Favorites" page, and one or more task options (including the task option 407B, the task option 407C, and the like) on the "Favorites" page are different from those on a "Process later" page.

In some embodiments, a task on the "Favorites" page is different from a task on the "Process later" page. Tasks may be saved by the user on different pages based on different deletion manners. For example, a task on the "Favorites" page needs to be manually deleted by the user regardless of whether the task is executed or not. For a task on the "Process later" page, the electronic device 100 may automatically delete the task after the electronic device 100 completes the task.

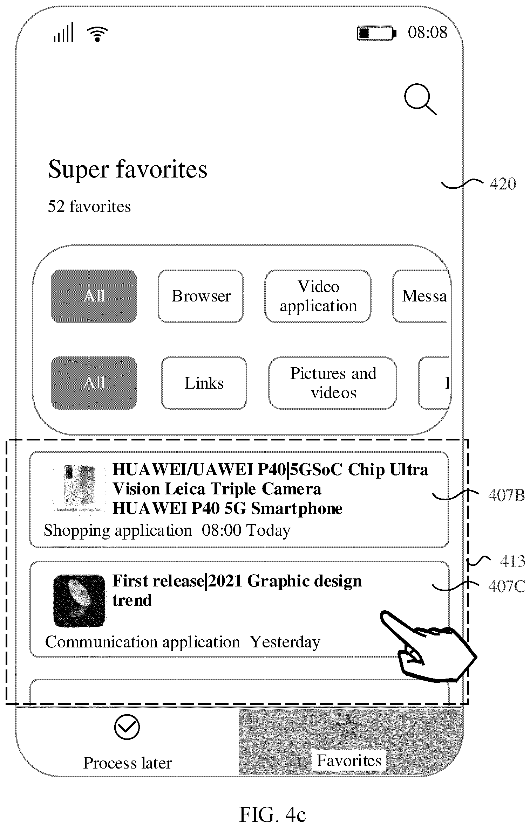

A layout of the task options in the task list area 413 shown in FIG. 4b is a grid layout, and is not limited to the layout shown in FIG. 4b. An embodiment of this application further shows another layout in FIG. 4c. The task options in the task list area 413 shown in an application interface 420 in FIG. 4c are arranged in a list.

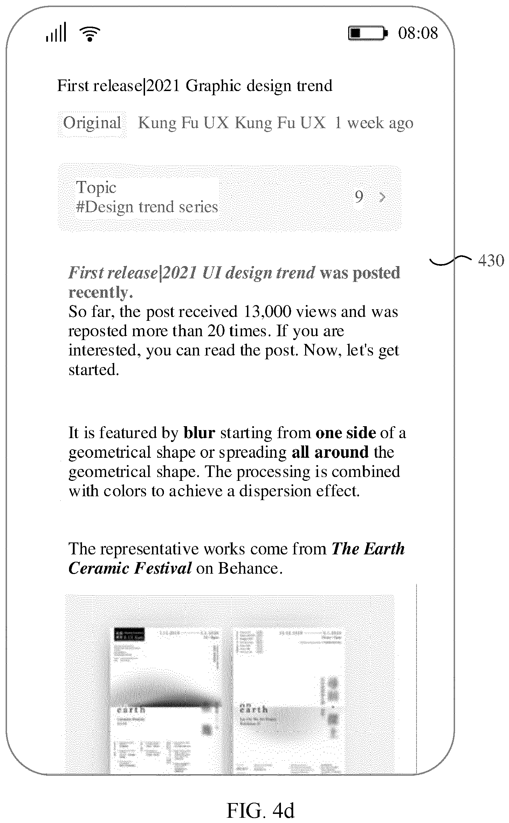

When the electronic device 100 receives a user operation performed on a task option 407C in the task list area 413, the electronic device 100 displays a specific application interface corresponding to the task option 407C. Herein, the electronic device 204 may open a page corresponding to the task option 407C in the super favorites application, or may jump to another application to open the page corresponding to the task option 407C. For example, the electronic device 100 displays a user interface 430 shown in FIG. 4d.

In some embodiments, when the electronic device 100 receives the user operation performed on the task option 407C in the task list area 413, the electronic device 100 provides the user with prompt information indicating a task execution manner of the task option 407C. The prompt information includes a plurality of task execution manners, for example, may include task execution in the super favorites application or task execution in another application. The another application may include a task source application and an application that can execute the task.

Optionally, the electronic device 100 preferentially executes the task in the task source application. When no task source application is installed in the electronic device 100, the electronic device 100 may prompt the user to install the task source application, or the electronic device 100 may execute the task with a web version of the task source application in a browser.

In some embodiments, when the electronic device 100 receives a user operation performed on a task option 407C in FIG. 4a, the electronic device 100 may directly display a specific application interface corresponding to the task option 407C, for example, display the user interface 430.

In some embodiments, the electronic device 100 and another electronic device (for example, the electronic device 101 or the electronic device 102) are in a distributed database system. Based on the distributed database, task data of the electronic device 100 is synchronized in super favorites applications of the electronic device 101 and the electronic device 102.

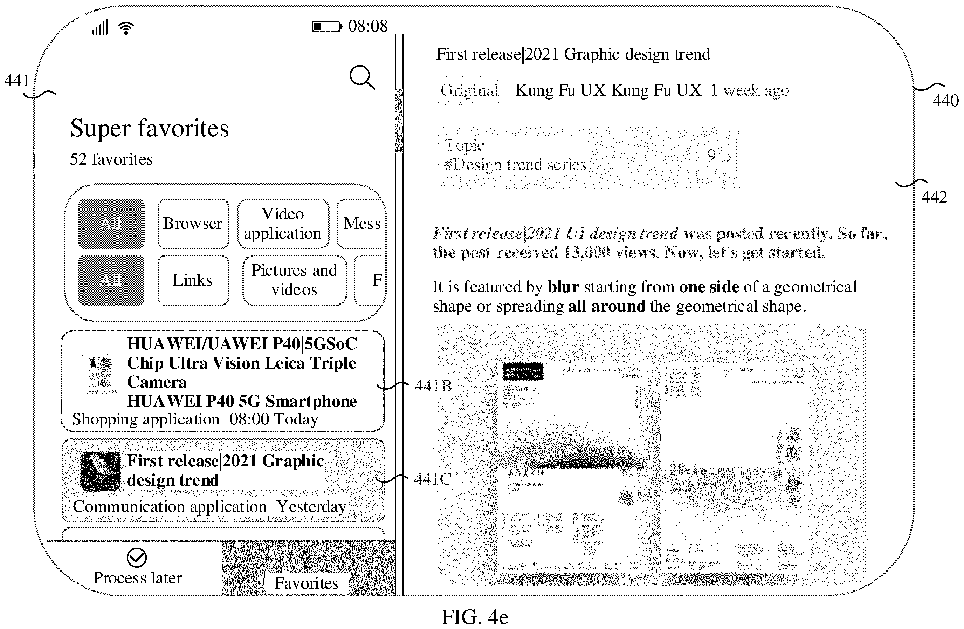

An example in which the electronic device 101 is a device like a tablet, a large screen, or a foldable phone is used in FIG. 4e. FIG. 4e shows an example display interface 440 of the super favorites application on the electronic device like a tablet, a large screen, or a foldable phone.

As shown in FIG. 4e, the display interface 440 includes a left screen interface 441 and a right screen interface 442. Sizes of display areas of the left screen interface 441 and the right screen interface 442 may be the same or may be different. Optionally, the electronic device 101 may perform automatic division to obtain the display areas of the left screen interface 441 and the right screen interface 442 based on display content. In FIG. 4e, the left screen interface 441 is a display interface of the super favorites application. It can be learned that a quantity of favorites (52 favorites) in the left screen interface 441 is the same as a quantity of favorites in the application interface 410 in FIG. 4b, and task options are the same as the task options in the application interface 410 (a task option 441B is the same as the corresponding task option 407B, and the task option 441C is the same as the corresponding task option 407C). For specific descriptions of the left screen interface 441, refer to related descriptions of the user interface 410 in FIG. 4b and the user interface 420 in FIG. 4c. Details are not described herein again. The right screen interface 442 is a specific application interface corresponding to a selected task option in the left screen interface 441. In FIG. 4e, the electronic device 101 receives a user operation performed on a task option 441C, and the electronic device 204 displays, in the right screen interface 442, a specific application interface corresponding to the task option 441C. Herein, the electronic device 101 may open a page corresponding to the task option 441C in the super favorites application, or may jump to another application to open the page corresponding to the task option 441C.

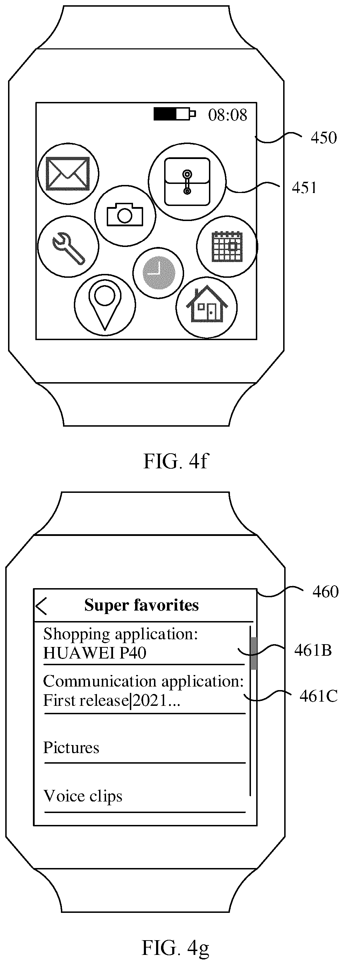

In FIG. 4f and FIG. 4g, an example in which the electronic device 102 is a device like as a smartwatch or a smart band is used. FIG. 4f and FIG. 4g show example interfaces of the super favorites application on the electronic device like a smartwatch or a smart band.

FIG. 4f shows an example home screen 450 of the electronic device 102. A plurality of application icons are displayed on the home screen 450. The home screen 90 includes an application icon 451 corresponding to the super favorites application. When the electronic device 102 receives a user operation performed on the application icon 451, the electronic device 102 displays an application interface provided by the super favorites application.

FIG. 4g shows an application interface 460 provided by the super favorites application. The application interface 460 may include a plurality of task options. The plurality of task options are the same as the task options in the application interface 410 in FIG. 4b (the task option 461B is the same as the corresponding task option 407B, and the task option 461C is the same as the corresponding task option 407C). When the electronic device 102 receives a user operation performed on any task option, the electronic device 102 displays a specific application interface corresponding to the task option.

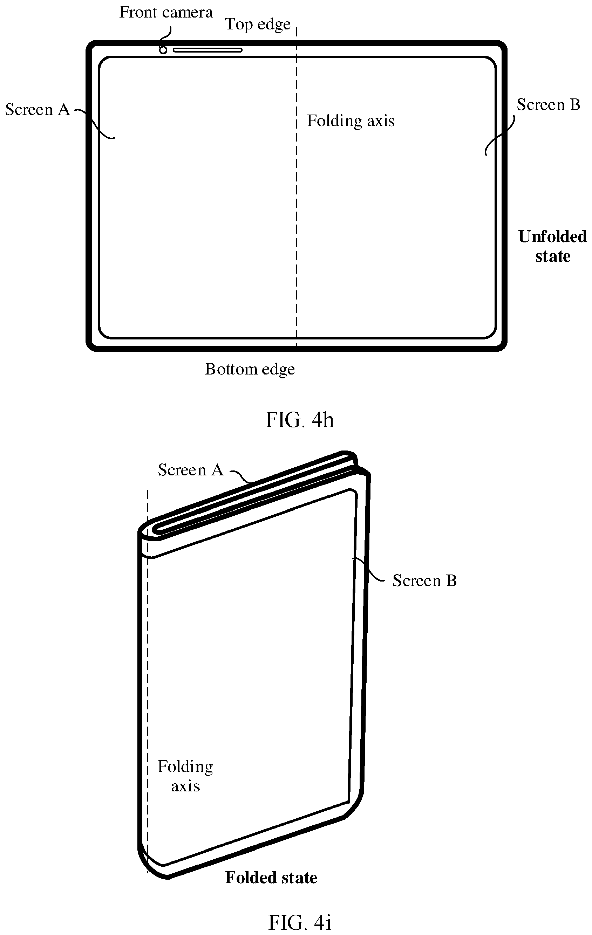

In some embodiments, the electronic device 100 is a foldable phone. When the electronic device 100 is in an unfolded state (as shown in FIG. 4h), a screen A and a screen B of the electronic device 100 are currently used, and a size of a display area of the screen A is the same as that of the screen B. For an interface displayed on the currently used screens of the electronic device 100, refer to the display interface 440 shown in FIG. 4e. When the electronic device 100 is in a folded state (as shown in FIG. 4i), the screen A or the screen B of the electronic device 100 may be currently used. For an interface displayed on the currently used screen of the electronic device 100, refer to the foregoing interfaces shown in FIG. 4a to FIG. 4d.

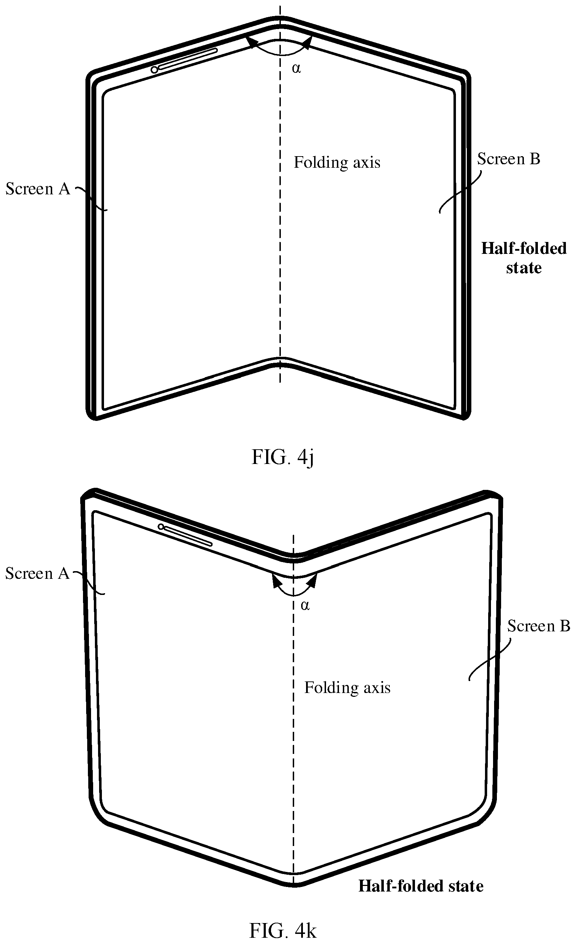

When the electronic device 100 is in a half-folded state (as shown in FIG. 4j and FIG. 4k), the screen A and the screen B of the electronic device 100 are currently used. For an interface displayed on the currently used screens of the electronic device 100, refer to the foregoing interfaces shown in FIG. 4a to FIG. 4d. When an angle α between the screen A and the screen B of the electronic device 100 is 180 degrees, the electronic device 100 is in the unfolded state. When the angle α between the screen A and the screen B of the electronic device 100 is 0 degrees or 360 degrees, the electronic device 100 is in the folded state. In some embodiments, as shown in FIG. 4j, when a numerical interval of the angle α between the screen A and the screen B is (0, 180), the electronic device 100 is in the half-folded state. As shown in FIG. 4k, when the numerical interval of the angle α between the screen A and the screen B is (180, 360), the electronic device 100 is in the half-folded state.

Optionally, when the electronic device 100 is in the half-folded state, the screen A and the screen B of the electronic device 100 are currently used. For a display interface on the screen A of the electronic device 100, refer to the left screen interface 441 shown in FIG. 4e. For a display interface on the screen B of the electronic device 100, refer to the right screen interface 442 shown in FIG. 4e. In other words, when the electronic device 100 is in the half-folded state, the display interface of the electronic device 100 is divided by a folding axis (the display interface of the electronic device 100 is evenly split). When the electronic device 100 is switched from the half-folded state to the unfolded state, the display interface of the electronic device 100 may include the left screen interface 441 and the right screen interface 442 shown in FIG. 4e (the display interface of the electronic device 100 is not evenly split).

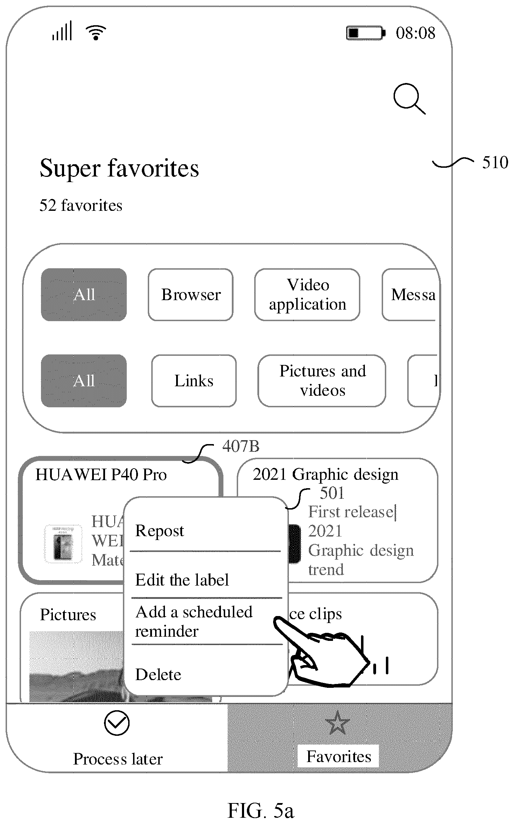

In FIG. 5a to FIG. 5c, an example in which the electronic device 100 is a smartphone is used below to describe some example functions of task options in the super favorites application.

In an application interface 510 shown in FIG. 5a, when the electronic device 100 receives a user operation performed on a task option 407B, the electronic device 100 displays a function bar 501 corresponding to the task option 407B, where the user operation may be, for example, a touch and hold operation or a double-tap operation, and the function bar 501 includes functions such as reposting, label editing, scheduled reminder addition, and deletion.

When the electronic device 100 receives a user operation performed on "Repost", the user may choose to send the task option 407B to another user. When the electronic device 100 receives a user operation performed on "Edit the label", the user may customize a task type of the task option 407B. When the electronic device 100 receives a user operation performed on "Delete", the user may delete the task option 407B or delete task data corresponding to the task option 407B. When the electronic device 100 receives a user operation performed on "Add a scheduled reminder", the user may set a reminder time for the task option 407B. When it is the set reminder time, the electronic device 100 outputs prompt information for the task option 407B.

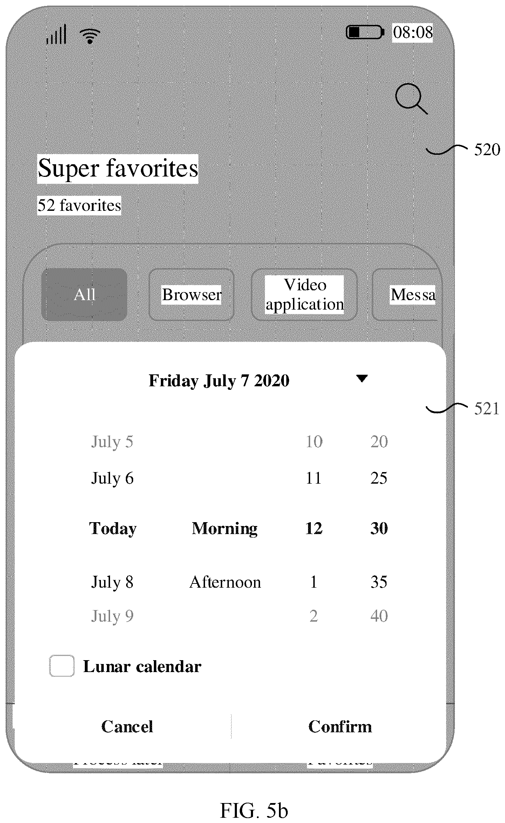

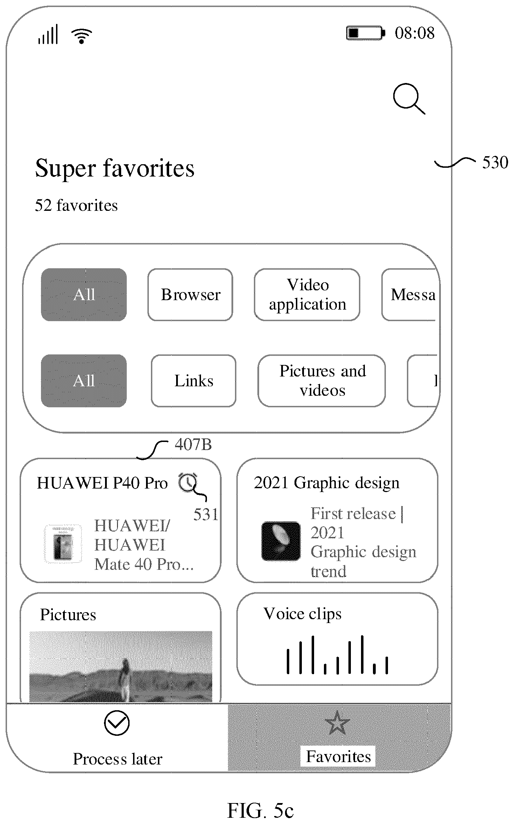

For example, when the electronic device 100 receives the user operation performed on "Add a scheduled reminder", the electronic device 100 displays a user interface 520 shown in FIG. 5b. The user interface 520 includes a time setting list 521 used by the user to set a reminder time for the task option 407B. After the user completes setting, the electronic device displays a user interface 530 shown in FIG. 5c. Compared with the task option 407B in the user interface 510, the task option 407B in the user interface 530 includes an icon 531 indicating that a task corresponding to the task option 407B is a task for which a scheduled reminder is added.

The foregoing briefly describes the application interfaces and some functions of the super favorites application. The following describes a possible application interface displayed in a process of adding a task to the super favorites application.

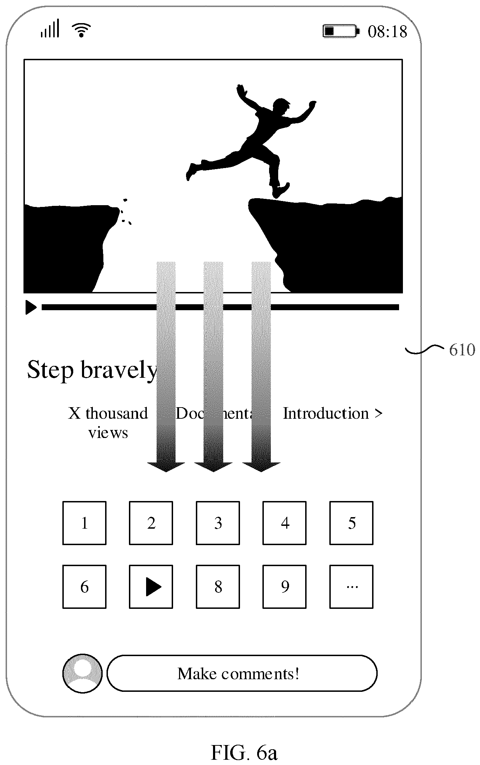

FIG. 6a shows a video playing interface 610. The video playing interface 610 includes a video display area 611 and a video information area 612. When the electronic device 100 receives a three-finger slide-down operation performed on the video playing interface 610, the electronic device 100 outputs a functional control for the video playing interface 610 in response to the three-finger slide-down operation, where the functional control includes a control for adding the video playing interface 610 to favorites.

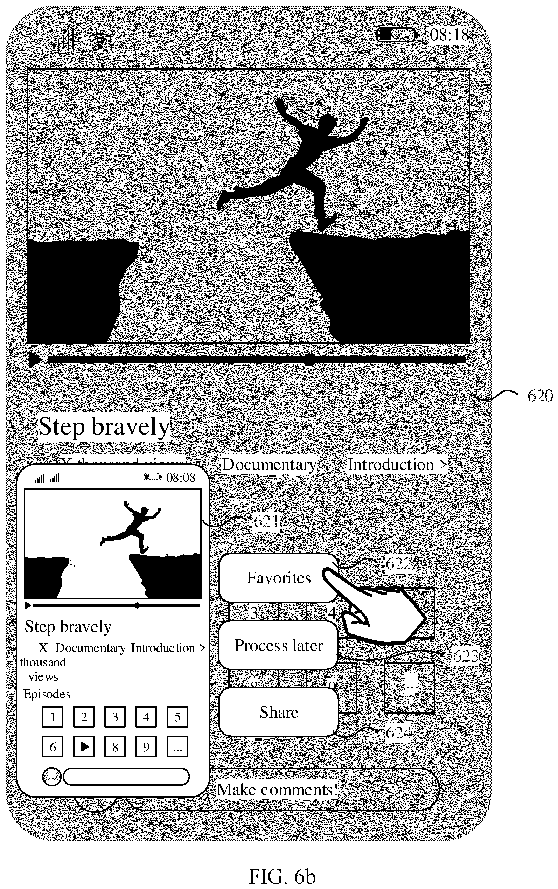

For example, when receiving a three-finger slide operation performed on the video playing interface 610, the electronic device 100 displays a user interface 620 shown in FIG. 6b. The three-finger slide-down operation is merely an example user operation, and does not limit the user operation of adding the video playing interface 620 to favorites in this embodiment of this application. The user interface 620 includes a thumbnail 621 and three functional controls for the thumbnail 621, which are respectively a "Favorites" control 622, a "Process later" control 623, and a "Share" control 624.

The thumbnail 621 is a thumbnail of the video playing interface 610.

The "Favorites" control 622 is used by the electronic device 100 to save task data corresponding to the video playing interface 610 to a "Favorites" page in the super favorites application. The task data herein may be video data played in the video display area 611, link information of the video playing interface 610, keywords and related information of a video played in the video display area 611, and the like.

The "Process later" control 623 is used by the electronic device 100 to save task data corresponding to the video playing interface 610 to a "Process later" page in the super favorites application.

The "Share" control 624 is used by the electronic device 100 to send the task data corresponding to the video playing interface 610 to another application or another electronic device.

When the electronic device 100 receives a user operation performed on the "Favorites" control 622, the electronic device 100 adds the video playing interface 610 to favorites. In this case, the user may view a task option corresponding to the video playing interface 610 in the super favorites application.

FIG. 6a and FIG. 6b show an example manner of adding a task to favorites. A manner of adding a task to favorites is not limited to the foregoing manner. In this embodiment of this application, a task may be added to favorites in another manner. In some embodiments, FIG. 6b is optional. The electronic device 100 receives a user operation (for example, a three-finger slide-down operation) on the video playing interface 610, and the electronic device 100 directly adds the task data corresponding to the video playing interface 610 to favorites. In some embodiments, the electronic device 100 provides a "Favorites" control on the video playing interface 610. When the electronic device 100 receives the user operation on the "Favorites" control, the electronic device 100 adds the task data corresponding to the video playing interface 610 to favorites. In some embodiments, the electronic device 100 provides a functional control on the video playing interface 610. The functional control provides functions such as adding to favorites, processing later, and sharing. When the electronic device 100 receives a user operation performed on the functional control, the electronic device 100 displays child functional controls such as a "Favorites" control, a "Process later" control, and a "Share" control. When the electronic device 100 receives a user operation performed on the "Favorites" control, the electronic device 100 adds the task data corresponding to the video playing interface 610 to favorites.

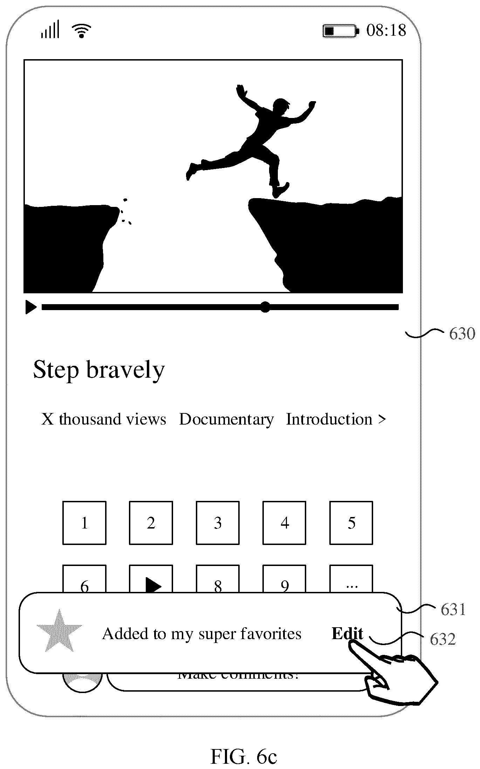

In some embodiments, after the electronic device 100 adds the task data corresponding to the video playing interface 610 to favorites, the electronic device 100 provides an editing function for the task data currently added in favorites. For example, after the electronic device 100 adds the task data corresponding to the video playing interface 610 to favorites, the electronic device 100 displays a user interface 630 shown in FIG. 6c. A notification bar 631 in the user interface 630 indicates that the task data corresponding to the current video playing interface 610 is added to the super favorites, and the notification bar 631 further includes an "Edit" control 632. The "Edit" control 632 is configured to edit the task data corresponding to the current video playing interface 610 added to the super favorites, where an editing manner includes reposting, label editing, scheduled reminder addition, deletion, and the like.

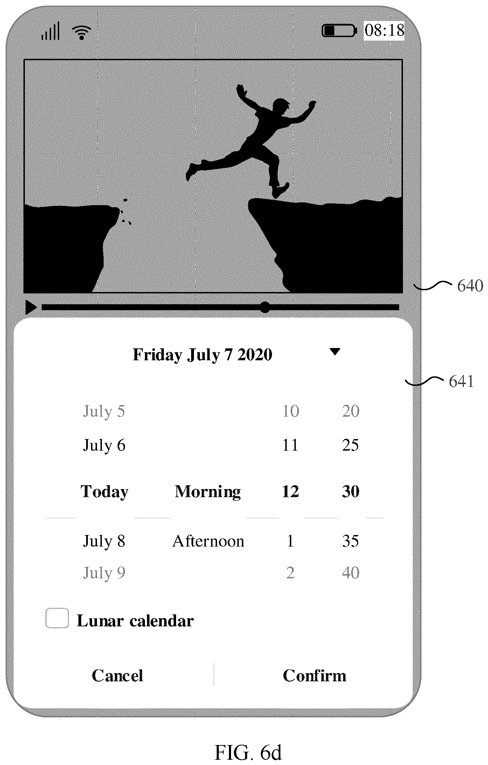

Optionally, when the electronic device 100 receives the user operation performed on the "Edit" control 632, the electronic device 100 displays a user interface 640 shown in FIG. 6d. The user interface 640 includes a time setting list 521 used by the user to set a reminder time for the task data corresponding to the video playing interface 610.

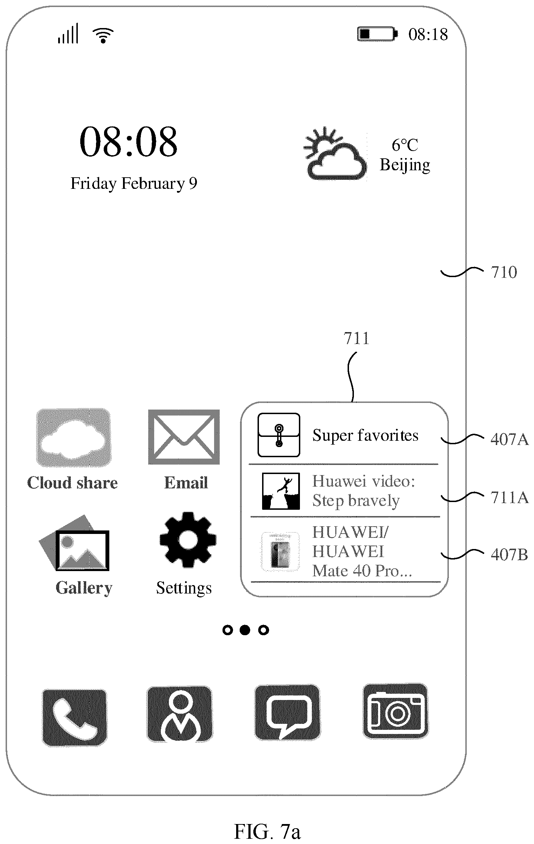

FIG. 7a shows a user interface 710 displayed after the electronic device 100 adds the task data corresponding to the video playing interface 610 to favorites. Compared with the widget 407 corresponding to the super favorites application in the user interface 401 shown in FIG. 4a, a task option 711A is added to the widget 711 corresponding to the super favorites application in the user interface 710, including a start control 407A, a task option 711A, and a task option 407B.

The task option 711A indicates the task data corresponding to the video playing interface 610. When the electronic device 100 receives a user operation performed on the task option 711A, the electronic device 100 may execute a task corresponding to the task option 711A, for example, display the video playing interface 610 shown in FIG. 6a. In some embodiments, the electronic device 100 executes a task corresponding to the task option 711A, and displays a video played in the video display area 611 of the video playing interface 610 in full screen.

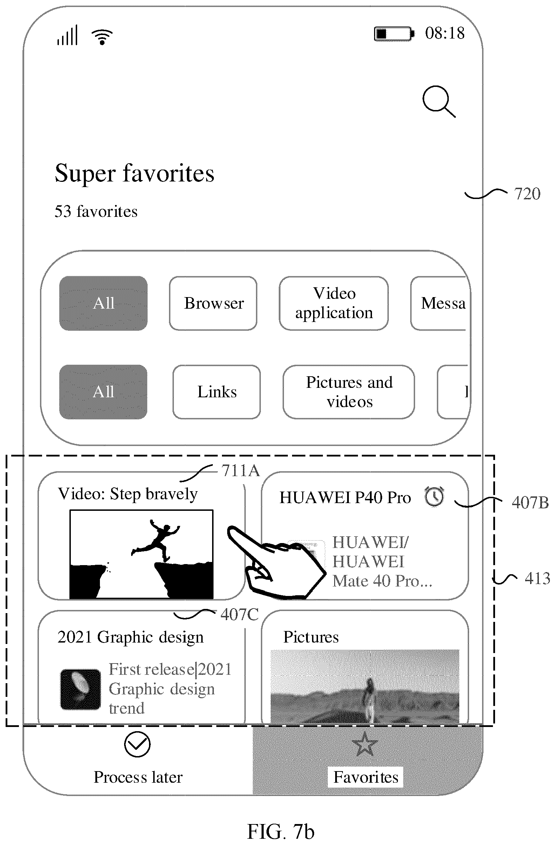

When the electronic device 100 receives a user operation performed on the task option 407A, the electronic device 100 displays an application interface 720 of the super favorites application. FIG. 7b shows the user interface 720 displayed after the task data corresponding to the video playing interface 610 is added to favorites. Compared with the application interface 410 of the super favorites application shown in FIG. 4b, there is an additional task in the super favorites application in the application interface 720 shown in FIG. 7b, and the super favorites application includes 53 tasks. In addition, a task option 711A is added to a task list area 413 of the application interface 720. When the electronic device 100 receives a user operation performed on the task option 711A, the electronic device 100 executes a task corresponding to the task option 711A, for example, display the video playing interface 610 shown in FIG. 6a.

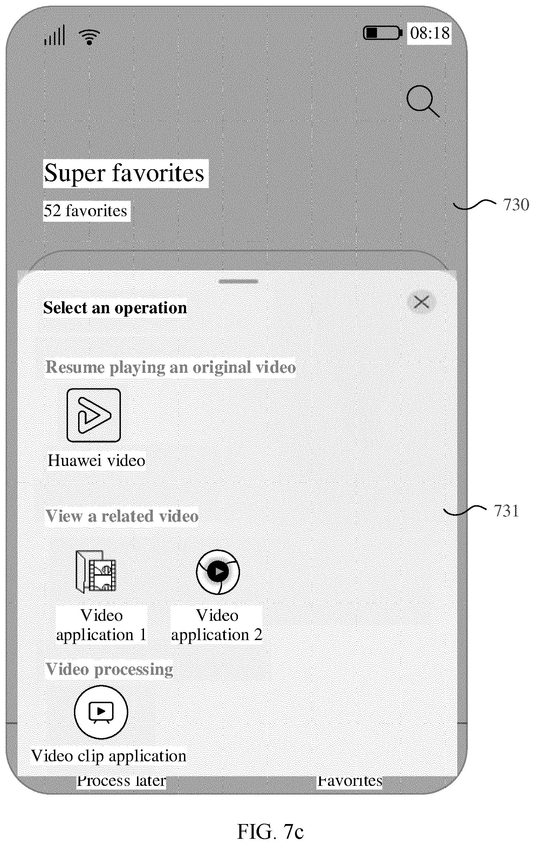

In some embodiments, when the electronic device 100 receives a user operation performed on the task option 711A, the electronic device 100 outputs an execution manner selection interface for executing the task corresponding to the task option 711A. For example, the electronic device 100 displays a user interface 730 shown in FIG. 7c. The user interface 730 includes a selection list 731. Because the task data corresponding to the task option 711A includes video data, the selection list 731 provides a plurality of execution manners for processing the video data. For example, the selection list 731 includes a manner of resuming playing an original video, that is, opening the video data corresponding to the task option 711A through a task source application (Huawei video). For another example, the selection list 731 includes a manner of viewing a related video, that is, opening the video data corresponding to the task option 711A with another video player (a video application 1 or a video application 2), or viewing a video related to the video data corresponding to the task option 711A. For another example, the selection list 731 includes a manner of processing the video data corresponding to the task option 711A with a video processing application (for example, a video clip application).

Optionally, when the electronic device 100 receives a user operation for resuming playing an original video, the electronic device 100 may display the video playing interface 610 shown in FIG. 6a. Optionally, when the electronic device 100 receives the user operation for resuming playing an original video, the electronic device 100 may display, in full screen, a video played in the video display area 611 of the video playing interface 610.

In some embodiments, the electronic device 100 and another electronic device (for example, the electronic device 101 or the electronic device 102) are in a distributed database system. Based on the distributed database, updated task data of the electronic device 100 is synchronized in the super favorites applications of the electronic device 101 and the electronic device 102.

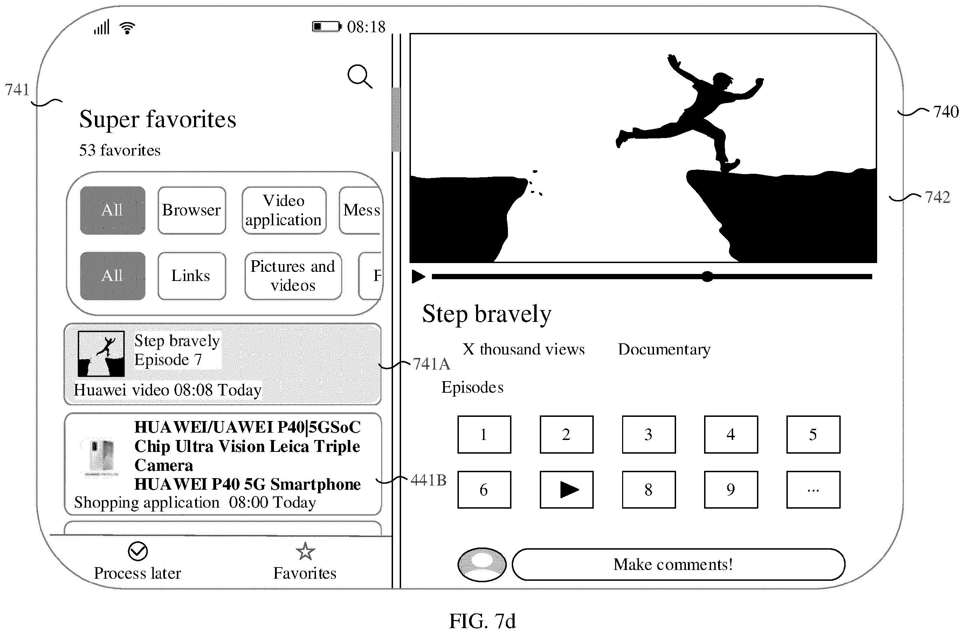

FIG. 7d shows an example display interface 740 of the super favorites application on the electronic device 101 (a tablet, a large screen, or the like).

As shown in FIG. 7d, the display interface 740 includes a left screen interface 741 and a right screen interface 742. The left screen interface 741 is a display interface of the super favorites application. It can be learned that a quantity of favorites (53 favorites) in the left screen interface 741 is the same as a quantity of favorites in the application interface 720 of the electronic device 100, and task options are the same as task options in the application interface 720 in FIG. 7b (a task option 741A is the same as the corresponding task option 711A, and the task option 441B is the same as the corresponding task option 407B). For specific descriptions of the left screen interface 741, refer to related descriptions of the user interface 720 in FIG. 7b. Details are not described herein again. The right screen interface 742 is a specific application interface corresponding to a selected task option in the left screen interface 741. In FIG. 7d, the electronic device 204 receives a user operation performed on the task option 741A, and the electronic device 101 displays, in the right screen interface 742, a specific application interface corresponding to the task option 741A. The specific application interface corresponding to the task option 741A may be a video playing interface 610 shown in FIG. 6a, or may be a video played in full screen in the video display area 611 of the video playing interface 610. Herein, the electronic device 101 may open a mini program, a link, or an application.

In some embodiments, the electronic device 100 adds a new task (a task corresponding to the task option 711A) to the super favorites application, and the electronic device 101 and the electronic device 102 determine, based on a task type of the new task data, whether the new task data needs to be synchronized to the super favorites applications of the electronic device 101 and the electronic device 102. For example, the electronic device 101 is a tablet. Because the tablet is not a portable device, it is inappropriate to synchronize a communication task with high privacy to the tablet. For another example, the electronic device 102 is a smartwatch. Because a screen of the smartwatch is small, it is inconvenient to watch a video. Therefore, it is inappropriate to synchronize a video task to the smartwatch.

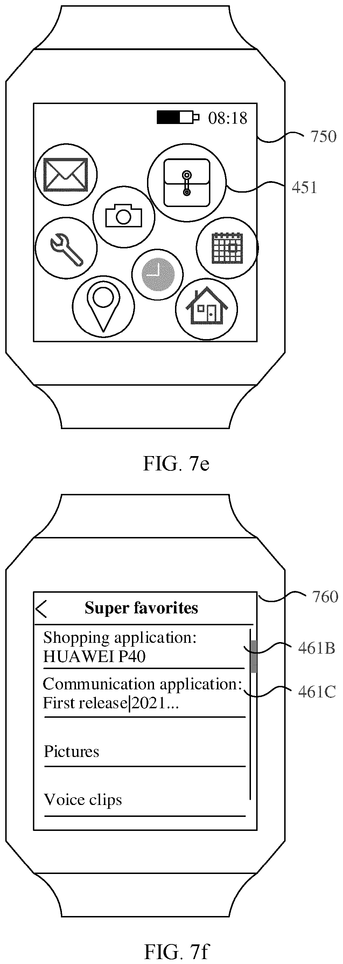

FIG. 7e shows a home screen 750 of the electronic device 102. When the electronic device 102 receives a user operation performed on an application icon 451 of the super favorites application, the electronic device 102 displays an application interface provided by the super favorites application. FIG. 7f shows a display interface 760 of the super favorites application on the electronic device 102. The display interface 760 includes a plurality of task options. Because it is inappropriate to synchronize a video task to the smartwatch, the plurality of task options in the display interface 760 do not include the added task option 711A in the electronic device 100. The task options in the electronic device 102 are still the same as the task options in the application interface 410 of the electronic device 100. When the electronic device 102 receives a user operation performed on any task option, the electronic device 102 displays a specific application interface corresponding to the task option.

In some embodiments, if the electronic device 100 deletes a piece of task data from the super favorites application, the task data is deleted from both the super favorites application of the electronic device 101 and the super favorites application of the electronic device 102.

The foregoing briefly describes a possible application interface displayed in a process of adding a task to the super favorites application. In the following descriptions, an example in which the electronic device 100 is a smartphone is used to describe an example application interface of a "Process later" part in the super favorites application and a possible application interface displayed in a process of adding a task to a "Process later" page.

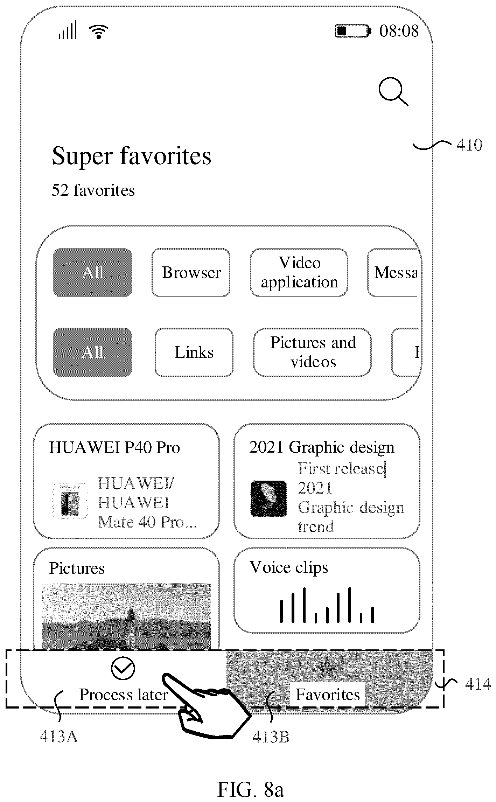

FIG. 8a shows an example application interface 410 of the super favorites application. FIG. 8a and FIG. 4a indicate a same application interface. For specific descriptions of FIG. 8a, refer to related descriptions of FIG. 4b. Details are not described herein again. When the electronic device 100 receives a user operation performed on the "Process later" option 413A, the electronic device 100 displays an application interface corresponding to the "Process later" option 413A.

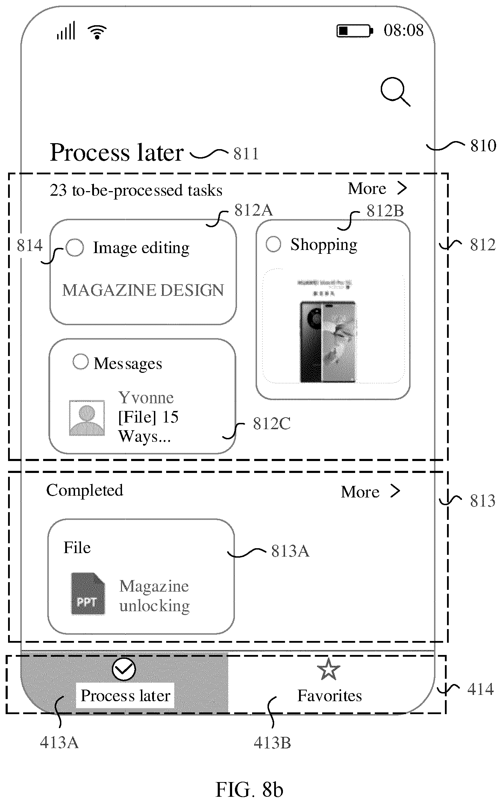

For example, FIG. 8b shows an application interface 810 corresponding to the "Process later" option 413A. It can be seen that, in FIG. 8b, the "Process later" option 413Ais marked. This indicates that a current page is a "Process later" page. The application interface 810 includes a title bar 811, an uncompleted task list area 812, a completed task list area 813, and a page menu 414.

The title bar 811 indicates that the current page is the "Process later" page.

One or more task options are displayed in the uncompleted task list area 812. For example, the super favorites application includes 23 to-be-processed tasks. Each task option corresponds to one to-be-processed task. To-be-processed tasks may come from different applications. For example, the uncompleted task list area 812 includes a task option 812A, a task option 812B, and a task option 812C. The user may slide in the uncompleted task list area 812 to view more uncompleted task options, or the user may tap "More" to view more uncompleted task options. When the electronic device 100 receives a user operation performed on any task option in the uncompleted task list area 812, the electronic device 100 displays a specific application interface corresponding to the task option.

In some embodiments, a task option in the uncompleted task list area 812 includes a control used to manually mark completion of the task option. For example, the task option 812A includes a control 814. When the electronic device 100 receives a user operation on the control 814, the electronic device 100 determines that the task option 812A is in a completed state, and the electronic device 100 displays the task option 812A in the completed task list area 812.

One or more task options are displayed in the completed task list area 813, and each task option corresponds to a completed task. For example, the completed task list area 813 includes a task option 813A. When a task is completed in the uncompleted task list area 812, a task option corresponding to the task is displayed in the completed task list area 813. The user may slide in the completed task list area 813 to view more completed task options, or the user may tap "More" to view more completed task options. Optionally, when the electronic device 100 receives a user operation performed on any task option in the completed task list area 813, the electronic device 100 displays a specific application interface corresponding to the task option.

A layout of the task options in the uncompleted task list area 812 and the completed task list area 813 shown in FIG. 8b is a grid layout, and is not limited to the layout shown in FIG. 8b. In this embodiment of this application, the task options may be arranged in a list. Herein, refer to the layout shown in FIG. 4c. Details are not described herein again.

In some embodiments, the electronic device 100 may further perform operations such as reposting, label editing, scheduled reminder addition, and deletion on the task option. When the electronic device 100 receives a user operation performed on a task option, the electronic device 100 displays a function bar corresponding to the task option, where the user operation may be, for example, a touch and hold operation or a double-tap operation, and the function bar includes functions such as reposting, label editing, scheduled reminder addition, and deletion. For specific descriptions of functions in the function bar, refer to related descriptions of the function bar 501 in FIG. 5a. Details are not described herein again.

In some embodiments, the electronic device 100, an electronic device 203, and an electronic device 204 are in a distributed database system. Based on the distributed database, task data, including task data on a "Process later" page, of the electronic device 100 is synchronized in super favorites applications of the electronic device 203 and the electronic device 204.

The foregoing briefly describes the application interface and some functions of the "Process later" page. The following describes a possible application interface displayed in a process of adding a task to the "Process later" page.

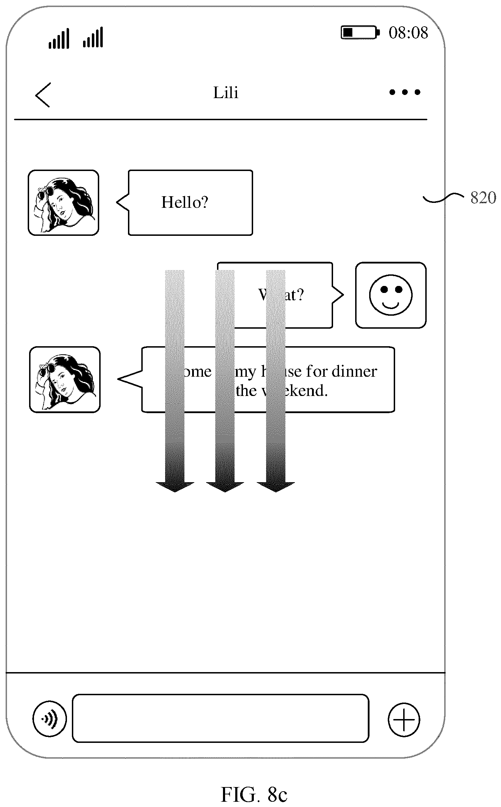

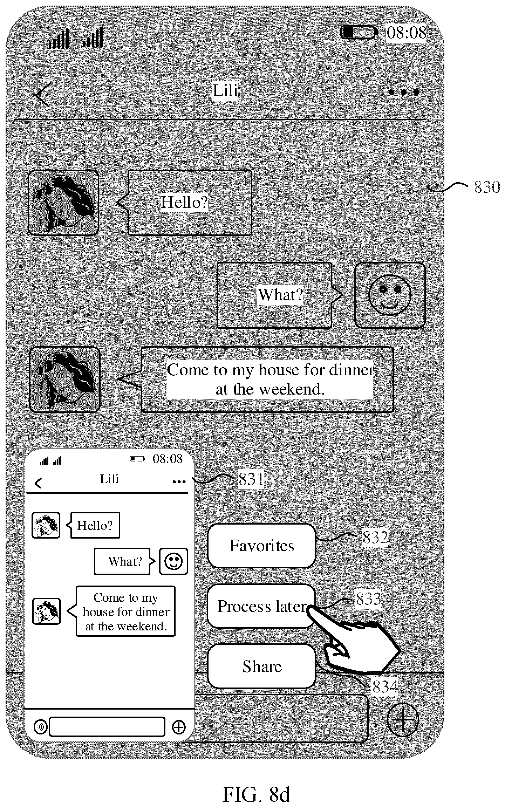

FIG. 8c shows a chat interface 820. When the electronic device 100 receives a three-finger slide-down operation performed on the chat interface 820, the electronic device 100 takes a screenshot of the chat interface 820, and for example, displays a user interface 830 shown in FIG. 8d. The three-finger slide-down operation is merely an example user operation, and does not limit the user operation of adding the chat interface 820 to the "Process later" page in this embodiment of this application. The user interface 830 includes a thumbnail 831 and a "Favorites" control 832, a "Process later" control 833, and a "Share" control 834 that correspond to the thumbnail 831.

The thumbnail 831 is a thumbnail of the chat interface 820.

The "Favorites" control 832 is used by the electronic device 100 to save task data corresponding to the chat interface 820 to a "Favorites" page in the super favorites application.

The "Process later" control 833 is used by the electronic device 100 to save task data corresponding to the chat interface 820 to a "Process later" page in the super favorites application.

A "Share" control 834 is used by the electronic device 100 to send the task data corresponding to the chat interface 820 to another application or another electronic device.

When the electronic device 100 receives a user operation performed on the "Process later" control 833, the electronic device 100 adds a task option corresponding to the chat interface 820 to the "Process later" page. In this case, the user may view the task option corresponding to the chat interface 820 in the "Process later" page of the super favorites application.

In some embodiments, when the electronic device 100 receives the user operation performed on the "Process later" control 833, the electronic device 100 outputs prompt information indicating that task data corresponding to the current chat interface 820 is added to the "Process later" page. The prompt information may further include an "Edit" control. The "Edit" control is used to edit the task data corresponding to the current chat interface 820 added to the "Process later" page. An editing manner includes reposting, label editing, scheduled reminder addition, deletion, and the like.

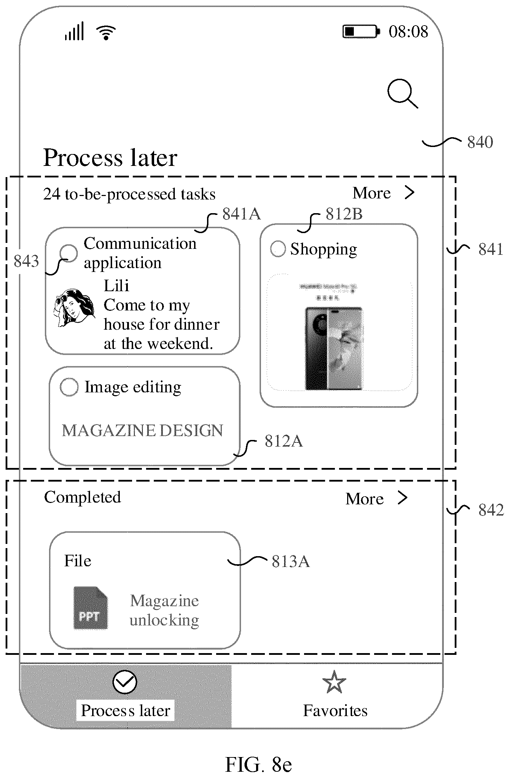

FIG. 8e shows a user interface 840 displayed after the electronic device 100 adds the task data corresponding to the chat interface 820 to favorites. Compared with the application interface 810 shown in FIG. 8b, there is one additional to-be-processed task in the uncompleted task list area 812 in the application interface 840 shown in FIG. 8e, and the application interface 840 includes 24 to-be-processed tasks. In addition, a task option 841A is added to a task list area 841 of the application interface 840. When the electronic device 100 receives a user operation performed on the task option 841A, the electronic device 100 executes a task corresponding to the task option 841A, for example, display the chat interface 820 shown in FIG. 8c.

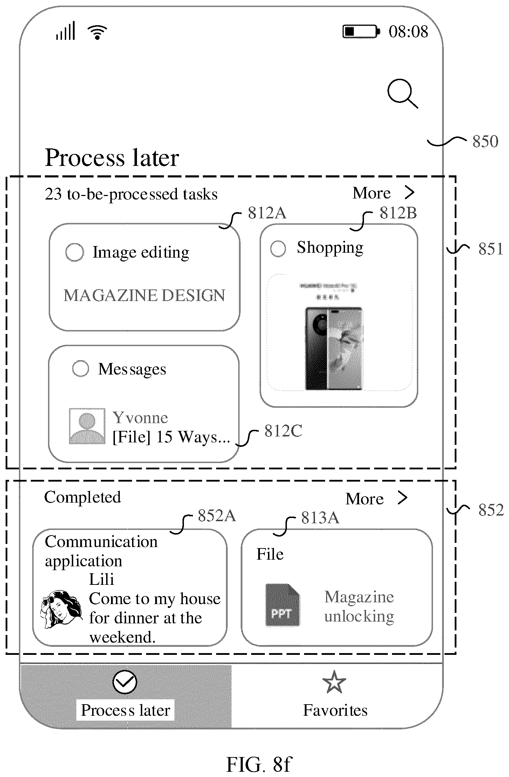

In some embodiments, after the electronic device 100 executes a task corresponding to the task option 841A, the task becomes a completed task. In this case, the electronic device 100 indicates that to-be-processed tasks are reduced by one and completed tasks are increased by one on the "Process later" page of the super favorites application. For example, FIG. 8f shows a user interface 850. Compared with the application interface 840 shown in FIG. 8e, in the uncompleted task list area 851 of the application interface 850 shown in FIG. 8f, one to-be-processed task is reduced; the uncompleted task list area 851 includes 23 to-be-processed tasks; and a task option 852A is added to a completed task list area 852, where the task option 852A corresponds to the completed task option 841A.

In some embodiments, the task option 841A in FIG. 8e includes a control 843 used to manually mark completion of the task option. When the electronic device 100 receives a user operation performed on the control 843, the electronic device 100 determines that the task option 841A is in a completed state, and the electronic device 100 displays the user interface 850 in FIG. 8f.

In some embodiments, when the electronic device 100 receives a user operation performed on the task option 841A, the electronic device 100 outputs an execution manner selection interface for executing the task corresponding to the task option 841A, for example, including opening the task data corresponding to the task option 841A with a task source application (a communication application), and for another example, including opening the task data corresponding to the task option 841A with another communication application, or querying a web page related to the task data corresponding to the task option 841A.

Optionally, when the electronic device 100 receives a user operation for resuming playing an original video, the electronic device 100 may display the chat interface 820 shown in FIG. 8c.

In some embodiments, the electronic device 100 and another electronic device (for example, the electronic device 101 or the electronic device 102) are in a distributed database system. Based on the distributed database, updated task data of the electronic device 100 is synchronized in the super favorites applications of the electronic device 101 and the electronic device 102.

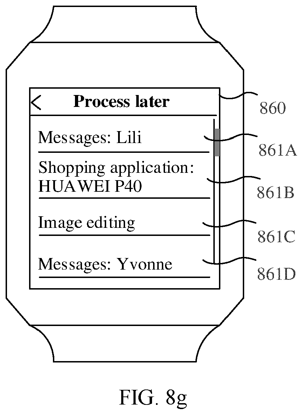

FIG. 8g shows an example display interface 860 of the "Process later" page of the super favorites application on the electronic device 101 (a smartwatch, a smart band, or the like). The display interface 860 may include a plurality of task options. The plurality of task options are the same as the task options in FIG. 8e of the electronic device 100 (a task option 861A is the same as the corresponding task option 841A, a task option 861B is the same as the corresponding task option 812B, a task option 861C is the same as the corresponding task option 812A, and a task option 861D is the same as the corresponding task option 812C). When the electronic device 101 receives a user operation performed on any task option, the electronic device 101 displays a specific application interface corresponding to the task option.

In some embodiments, the electronic device 100 adds a new task (a task corresponding to the task option 841A) to the super favorites application, and the electronic device 101 and the electronic device 102 determine, based on a task type of the new task data, whether the new task data needs to be synchronized to the super favorites applications of the electronic device 101 and the electronic device 102. For example, the electronic device 101 is a tablet. Because the tablet is not a portable device, it is inappropriate to synchronize a task of a communication type with high privacy to the tablet. Therefore, the task corresponding to the task option 841A is not added to the tablet (the electronic device 101), and a display interface of the electronic device 101 is still the same as the interface shown in FIG. 7d.

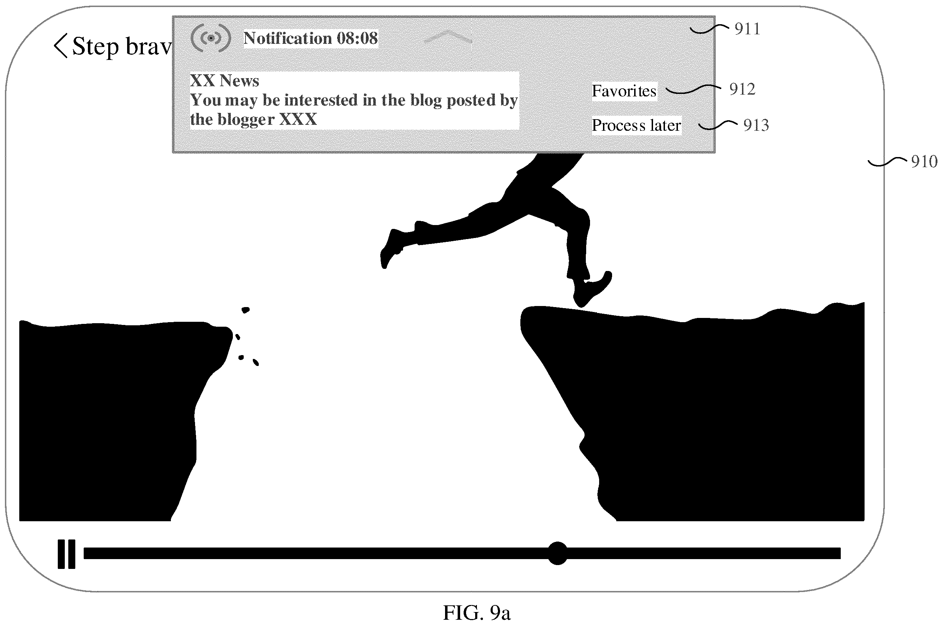

FIG. 8c and FIG. 8d show an example manner of adding a task to the "Process later" page, and the manner is not limited to the foregoing manner. In this embodiment of this application, there may be another manner of adding a task to the "Process later" page. For example, as shown in FIG. 9a, the electronic device 101 is playing a video. In this case, a notification 911 pops up on a video playing interface 910. The notification 911 is from an XX news application, and the notification 911 includes a "Favorites" control 912 and a "Process later" control 913. When the electronic device 204 receives a user operation performed on the "Process later" control 913, the electronic device 101 adds a task in the notification 911 to the "Process later" page in the super favorites application. The user may then execute a task corresponding to the notification 911 in the "Process later" page in the super favorites application.

In some embodiments, the "Favorites" control 912 and the "Process later" control 913 are optional. The electronic device 101 may automatically save a newly received message and notification to the super favorites application, and the user does not perform a manual operation.

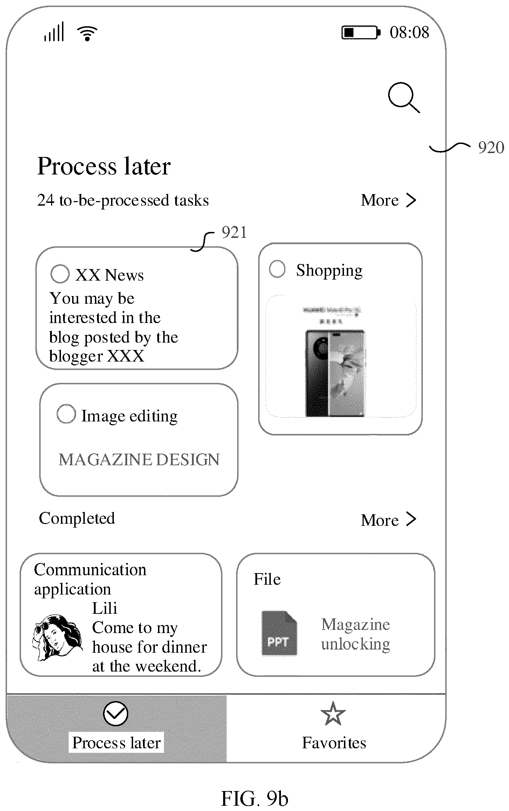

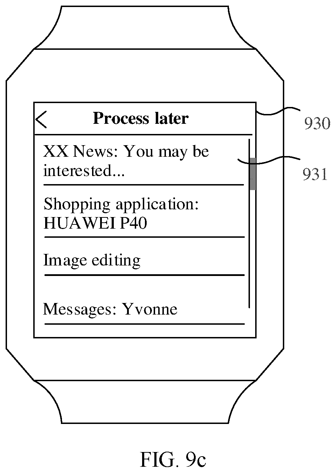

FIG. 9b and FIG. 9c show display interfaces of synchronizing the "Process later" task between the electronic device 100 and the electronic device 102. As shown in FIG. 9b, the electronic device 100 adds a task option 921 to the display interface 920 of the "Process later" page, and task data corresponding to the task option 921 is the notification data corresponding to the notification 911. As shown in FIG. 9c, the electronic device 102 adds a task option 931 to a display interface 930 of the "Process later" page, and task data corresponding to the task option 931 is the notification data corresponding to the notification 911. In this way, the user may view, on the electronic device 100 or the electronic device 102, the data corresponding to the notification 911 without pausing the video on the electronic device 101.

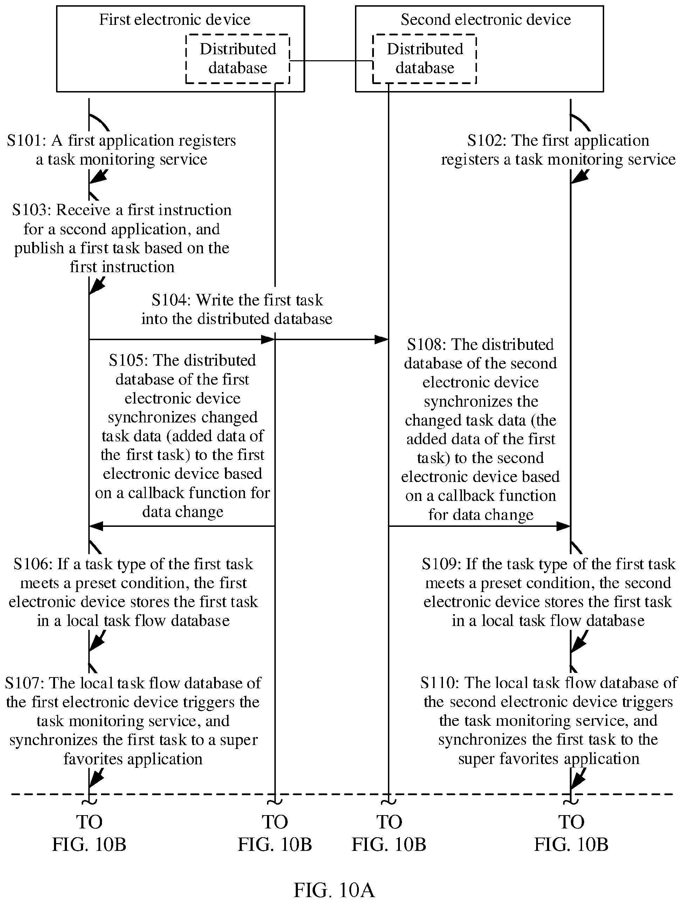

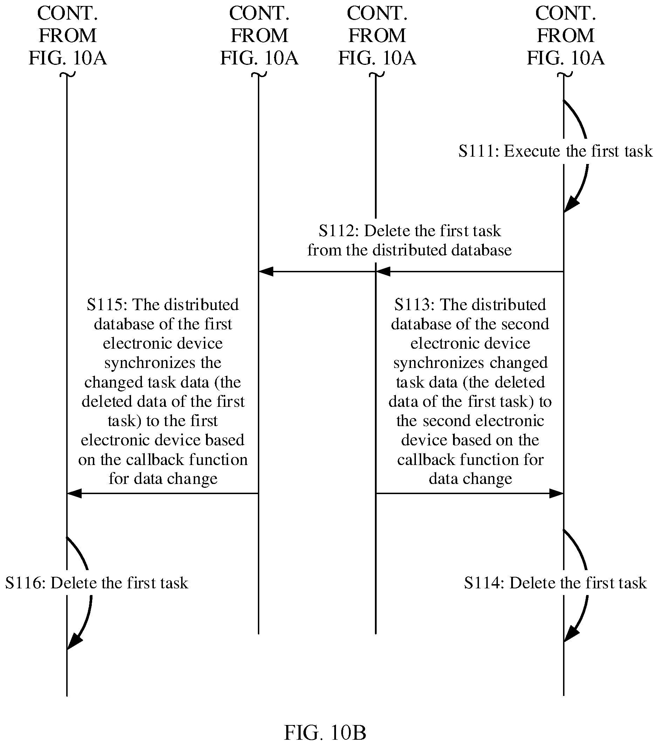

Based on the foregoing application scenario and the system architectures shown in FIG. 1a and FIG. 1b, the following describes, with reference to an example, a step procedure of a task synchronization method provided in this application. FIG. 10A and FIG. 10B are a step flowchart of a task synchronization method. Devices in the method flowchart include a first electronic device and a second electronic device, and a super favorites application is installed on both the first electronic device and the second electronic device. The first electronic device and the second electronic device each may be any one of the electronic device 100, the electronic device 101, and the electronic device 102, or each may be any one of the electronic device 200, the electronic device 201, the electronic device 202, the electronic device 203, and the electronic device 204.

In this embodiment of this application, the super favorites application may also be referred to as a second application.

The method may include the following steps.

Step S101: The second application of the first electronic device registers a task monitoring service.

The super favorites application is installed on the first electronic device. When the first electronic device runs the super favorites application for the first time, the super favorites application of the first electronic device registers the task monitoring service, to monitor a change of task data in a local task flow database.

Specifically, the first electronic device runs the super favorites application for the first time, and the super favorites application invokes a client of a task flow manager to register the task monitoring service with the local task flow database. The client of the task flow manager invokes an interface provided by a database management system DBMS, to register a callback function with the task flow manager. The callback function is used by the task flow manager to call back changed task data to the super favorites application when the task flow manager detects that there is a change (for example, addition, deletion, or modification) in task data in the local task flow database.

In some embodiments, the first electronic device runs the super favorites application, and the super favorites application determines whether the task monitoring service is registered. If no, the super favorites application registers the task monitoring service.

Step S102: The second application of the second electronic device registers a task monitoring service.

The super favorites application is installed on the second electronic device. When the second electronic device runs the super favorites application for the first time, the super favorites application of the second electronic device registers the task monitoring service, to monitor a change of task data in a local task flow database.

A principle of registering the task monitoring service by the super favorites application of the second electronic device is the same as that of the first electronic device. Refer to the specific descriptions in step S101. Details are not described herein again.

Step S 103: The first electronic device receives a first instruction for a first application, and publishes a first task based on the first instruction.

The first electronic device receives the first instruction. The first instruction is an instruction for the first application, and the first application is an application different from the super favorites application. The first electronic device generates task data and publishes the first task based on the received first instruction. The task data is task data from the first application. The task data may include link data, picture data, video data, audio data, file data, text data, character data, and the like. The first instruction may be a user operation, or may be an instruction sent by the second application to the first electronic device. A related user operation is not limited in this embodiment of this application, for example, includes a screenshot operation, a three-finger slide-down operation, a physical button operation, and a tap operation.

Specifically, the first electronic device receives the first instruction for the first application, and the first application generates the task data based on the first instruction, and invokes the client of the task flow manager to publish the first task. The client of the task flow manager invokes the interface provided by the database management system DBMS to publish the first task to the task flow manager, and the task flow manager writes the first task into the local task flow database.

For example, in FIG. 6a, the electronic device 100 is a first electronic device. The electronic device 100 displays the video playing interface 610. The first instruction is a three-finger slide-down operation that is performed on the video playing interface 610 and that is received by the electronic device 100. The electronic device 100 generates task data of the video playing interface 610 based on the three-finger slide-down operation.

In some embodiments, data of the first task includes task data and a task attribute. The task data may include link data, picture data, video data, audio data, file data, text data, character data, and the like. The task attributes include a task type, task reminder time, a task source application, a task execution application, and task status information.

The task type may be determined by the first electronic device, or may be set by the user. Task classification may be based on a task source application, a task data type, a task security permission, a task source device, a task reminder time, and the like. If task classification is based on the take source application, the task type may include a browser task, a video application task, a communication application task, a music application task, and the like. If task classification is based on the task data type, the task type may include a link task, a picture task, a video task, a file task, an audio task, and the like. If task classification is based on the task security permission, the task type may include a privacy task (for example, an SMS message task or a communication application task), a high-risk task (for example, a payment application task), a low-risk task, and the like. If task classification is based on the task source device, the task type may include a first-electronic-device task, a second-electronic-device task, and the like. If task classification is based on the task reminder time, the task type may include a today's task, a yesterday's task, a task of a previous month, a task of a specific day in a specific month, and the like. By classifying tasks into different types, task management is easy for the user. For example, the task type selection bar 412 in FIG. 4b lists task types related to tasks in the super favorites application. The user may filter and manage a plurality of tasks based on a task type that the user wants to operate. In this way, user experience is improved.

Optionally, after receiving the first instruction, the first electronic device generates the task data, and the first electronic device provides a task type option corresponding to the task data. Based on a received task type confirmed by the user, the first electronic device confirms a task type of the task data, and publishes the first task.

Optionally, the first electronic device generates the task data, and the user may determine the task type of the task data based on the task type option that is provided by the first electronic device and that corresponds to the task data. The first electronic device publishes the first task.

Optionally, after the first electronic device publishes the first task, the user may change the task type of the first task by using the task type option that is provided by the first electronic device and that corresponds to the task data.

The task reminder time may be automatically determined by the first electronic device, or may be set by the user. For example, the first electronic device determines the task reminder time according to a preset rule. For example, the task reminder time is one hour after the task data is added, for example, reminding in a fixed time period. For another example, after the first electronic device receives the first instruction, the first electronic device provides a task reminder time setting interface, for example, the time setting list 521 in FIG 6d provided by the electronic device 100 for the user to set a reminder time for current favorite task data.

Optionally, the first electronic device generates the task data, and the user may determine a task reminder time of the task data based on the task reminder time setting interface that is provided by the first electronic device and that corresponds to the task data. The first electronic device publishes the first task.

Optionally, after the first electronic device publishes the first task, the user may change the task reminder time of the task data in the task reminder time setting interface that is provided by the first electronic device and that corresponds to the task data.

The task source application is a source application of the task data. The first electronic device receives a first instruction for the first application, and publishes a first task based on the first instruction. In this case, the task source application of the first task is the first application.

A task execution application includes an application that can execute task data. For example, if the first task is a video task, a task execution application of the first task includes a video playing application, a video clip application, and the like.

Task status information indicates a status before an application generates task data, and includes window mode (window mode) information, intent information, and the like. The window mode information indicates a display mode of the application that is running in a foreground. For example, when a value of the window mode information is 1, it indicates that a previous display mode of the application is full-screen display. When the value of the window mode information is 101, it indicates that the display mode of the application is split-screen display. The intent information includes information required to start an application, for example, one or more of the following data: resource data, a device ID, an application package name, a class name, progress data, and a cleanup mode. In addition, other user data may be further stored. For example, the first electronic device publishes a first task of a video application, and the video application may store a uniform resource identifier (Uniform Resource Identifier, URI), video progress data of a video being played, and the like as intent information. In this way, when another device executes the first task, the video being played by the first electronic device may be "seamlessly switched" (or referred to as hopping or migration).

In some embodiments, the first electronic device runs a first application. The first electronic device displays a first interface in the first application. The first electronic device receives a user operation (which may also be referred to as a first instruction) performed on the first interface. In response to the user operation, the first electronic device generates task data of the first interface.

For example, the first interface is a video playing interface. The first electronic device receives the user operation performed on the first interface, and the first electronic device generates the task data of the first interface. The task data of the first interface may include a link of the video playing interface, or may include video data in the video playing interface, or may include a video link in the video playing interface, or may include information like a video name and a video keyword in the video playing interface, or the like. The task data of the video playing interface may further include information like a video playing time and a user login account.

For another example, if the first interface is a news browsing interface, the task data of the first interface may include a link of the news browsing interface, or may include a screenshot of the news browsing interface, or may include information like a news title and a news keyword in the news browsing interface.

Optionally, the first interface provides a functional control. The functional control is used to indicate the first electronic device to generate task data of a current interface (the first interface). The first instruction may be a user operation performed on the functional control. When the first electronic device receives the user operation performed on the functional control in the first interface, the first electronic device generates the task data of the first interface and publishes the first task.

Optionally, after the first electronic device receives the first instruction performed on the first interface, the first electronic device outputs the functional control for the first interface, where the functional control is used to indicate the first electronic device to generate task data of a current interface (the first interface). When the first electronic device receives the user operation performed on the functional control, the first electronic device generates the task data of the first interface and publishes the first task. For example, in FIG. 6a and FIG. 6b, the electronic device 100 is the first electronic device, and the first instruction is the three-finger slide-down operation received by the electronic device 100 in FIG. 6a. The electronic device 100 outputs, based on the three-finger slide-down operation, the functional control shown in FIG. 6b, including the "Favorites" control 622. When the electronic device 100 receives a user operation (for example, a tap operation) on the "Favorites" control 622, the electronic device 100 generates the task data of the video playing interface 610.

In some embodiments, the first electronic device runs the second application. The first electronic device displays a first interface in the second application. The first electronic device generates task data of a specific element in the first interface based on a received user operation (which may also be referred to as a first instruction).

For example, the first interface is a chat interface. A chat record in the chat interface includes data like a picture and a file. If the first electronic device receives a user operation performed on a picture in the chat interface, the first electronic device generates task data of the picture, where the task data of the picture includes picture data. If the first electronic device receives a user operation performed on a file (a word file, an excel file, or the like) in the chat interface, the first electronic device generates task data of the file, where the task data of the file includes the file data. If the first electronic device receives a user operation performed on the chat interface, the first electronic device generates task data of the chat interface, where the task data of the chat interface may include a link of the chat interface.

In some embodiments, the first instruction is a notification instruction received by the first electronic device, and after receiving a user operation performed on the notification instruction, the first electronic device generates task data based on the notification instruction.

For example, the first interface is a news browsing interface, and the first electronic device receives a video update notification of a video application. Optionally, the video update notification provides a control for generating task data of the video update notification. When the first electronic device receives a user operation performed on the control, the first electronic device generates the task data of the video update notification. The task data includes notification data of the video update notification.

For example, in FIG. 9a, the electronic device 204 is a first electronic device. The electronic device 204 displays a video playing interface 910. The electronic device 204 receives a notification 911 from an XX news application. In this case, a first instruction is a notification instruction corresponding to the notification 911 received by the electronic device 204. When the electronic device 100 receives a user operation performed on a "Favorites" control 912 or a "Process later" control 913 in the notification 911, the electronic device 204 generates task data of the notification instruction based on the user operation.

Optionally, the first instruction is a notification message received by the electronic device 100, and the electronic device 204 directly generates task data of the notification message based on the notification message.

For example, the first interface is a news browsing interface, and the first electronic device receives a video update notification of a video application. The first electronic device generates task data based on the received video update notification. The task data includes notification data of the video update notification.

Step S104: The first electronic device writes the published first task into a distributed database.

The first electronic device writes the published first task into the distributed database. Specifically, the local task flow database of the first electronic device writes the published first task into a distributed database of the first electronic device, and the distributed database of the first electronic device synchronizes the first task to a distributed database of the second electronic device.

In some embodiments, before the distributed database of the first electronic device synchronizes the first task to the distributed database of the second electronic device, the first electronic device determines whether the second electronic device meets a preset condition. If yes, the distributed database of the first electronic device synchronizes the first task to the distributed database of the second electronic device. If no, the distributed database of the first electronic device does not synchronize the first task to the distributed database of the second electronic device.

The preset condition includes a condition that the second electronic device is a trusted device of the first electronic device; the preset condition further includes a condition that a device type of the second electronic device is a trusted device of the first electronic device; the preset condition further includes a condition that the second electronic device is capable of processing the first task; the preset condition further includes a condition that an application that can process the first task is installed in the second electronic device; the preset condition further includes a condition that a task source application of the first task is installed in the second electronic device; the preset condition further includes a condition that a security attribute of the second electronic device matches the first task; the preset condition further includes a condition that the second electronic device is currently a portable device; the preset condition further includes a condition that the first electronic device receives a user confirmation instruction for the second electronic device; and the preset condition further includes other conditions.

Step S105: The distributed database of the first electronic device synchronizes changed task data (added data of the first task) to the first electronic device based on the callback function for data change.

Because data in the distributed database of the first electronic device is changed, the distributed database of the first electronic device triggers the callback function for data change, and based on the callback function, the distributed database of the first electronic device synchronizes the changed task data to the local task flow database of the first electronic device, where the changed task data is the added data of the first task.

Optionally, step S106: The first electronic device receives the data of the first task, and if the first task meets a preset condition, the first electronic device stores the first task in the local task flow database.

The first electronic device receives the data of the first task, and determines whether the first task meets the preset condition of the first electronic device. If yes, the first electronic device stores the first task in the local task flow database. If no, the first electronic device filters out the first task.

In some embodiments, the preset condition is that the task type of the first task matches a device capability of the first electronic device, in other words, the first electronic device has a capability of processing the first task. For example, the first electronic device is a wearable device like a smartwatch or a smart band. Because a display screen of the smartwatch or the smart band is relatively small, it is inconvenient to watch a video, and therefore, it is inappropriate to synchronize a video task to the smartwatch. In this case, when the task type of the first task is video, and the first electronic device is a wearable device like a smartwatch or a smart band, the first electronic device filters out the first task. Alternatively, when the task type of the first task is video, and the first electronic device is a large-screen device like a tablet or a computer, the first electronic device stores the first task in the local task flow database.

For another example, the first electronic device filters out the first task when the task type of the first task is SMS message and the first electronic device is a device that does not have a cellular mobile communication function, for example, a smart band, a tablet, and a computer. The first electronic device stores the first task in the local task flow database when the task type of the first task is SMS message and the first electronic device is a device that has a cellular mobile communication function, for example, a mobile phone or a phone watch.

In some embodiments, the preset condition is that the task type of the first task matches an application of the first electronic device, in other words, an application for processing the first task is installed on the first electronic device. For example, the first task is a video task. If no application for video processing is installed on the first electronic device, the first electronic device filters out the first task. If an application for video processing is installed on the first electronic device, the first electronic device stores the first task in the local task flow database.

In some embodiments, the preset condition is that the task source application of the first task matches an application of the first electronic device, that is, the task source application of the first task is installed on the first electronic device. For example, the first task is a task from a "Huawei video" application. If the "Huawei video" application is not installed on the first electronic device, the first electronic device filters out the first task. If the "Huawei video" application is installed on the first electronic device, the first electronic device stores the first task in the local task flow database.

In some embodiments, the preset condition is that a risk attribute of the first task matches a device type of the first electronic device, and the risk attribute includes high risk, medium risk, low risk, and the like. The high-risk task includes a payment task, a financial task, and the like. For example, the first electronic device is a tablet, a stereo, or the like. Because an electronic device like a tablet or a stereo is usually not a dedicated device carried by a user, it is inappropriate to synchronously store a high-risk task on a device like a tablet or a stereo. For a device that is usually carried by the user, for example, a mobile phone, a smartwatch, or a smart band, it is appropriate to synchronously store a high-risk task. In this case, when the task type of the first task is the high-risk type, and the first electronic device is a mobile phone, a smartwatch, a smart band, or the like, the first electronic device stores the first task in the local task flow database. Alternatively, when the task type of the first task is the high-risk type, and the first electronic device is a large-screen device like a tablet or a computer, the first electronic device filters out the first task.

In some embodiments, the preset condition is that a privacy attribute of the first task matches a device type of the first electronic device, and the privacy attribute includes a privacy type, a non-privacy type, and the like. A privacy task includes an SMS message task, an email task, and the like. For example, the first electronic device is a tablet, a stereo, or the like. Because an electronic device like a tablet or a stereo is not a dedicated device carried by the user, it is inappropriate to synchronously store a privacy task on a device like a tablet or a stereo. For a device that is usually carried by the user, for example, a mobile phone, a smartwatch, or a smart band, it is appropriate to synchronously store a privacy task. In this case, when the task type of the first task is the privacy type, and the first electronic device is a mobile phone, a smartwatch, a smart band, or the like, the first electronic device stores the first task in the local task flow database. Alternatively, when the task type of the first task is the privacy type, and the first electronic device is a large-screen device like a tablet or a computer, the first electronic device filters out the first task.

Optionally, the first electronic device may determine whether the first electronic device is currently carried by the user. If yes, the first electronic device may synchronously store a privacy task or a high-risk task. Optionally, when the first electronic device detects that the first electronic device is currently carried by the user, the first electronic device stores a privacy task or a high-risk task.

In some embodiments, the preset condition is that a trust relationship exists between a task source device of the first task and the first electronic device. If the first task is released by a trusted device of the first electronic device, the first electronic device stores the first task in the local task flow database. If the first task is not released by a trusted device of the first electronic device, the first electronic device filters out the first task. Optionally, the trust relationship may be established by the user, and the user may select a trusted device of the first electronic device. Optionally, the trust relationship may be automatically established by the first electronic device. For example, if the first electronic device and the second electronic device are in a same network, the first electronic device and the second electronic device are mutually trusted. For example, if the first electronic device and the second electronic device share an application account, the first electronic device and the second electronic device are mutually trusted. For example, if the first electronic device and the second electronic device establish a connection based on a same link key, the first electronic device and the second electronic device are mutually trusted.

In some embodiments, the preset condition is that a trust relationship exists between the task source device of the first task and the device type of the first electronic device, and the device type includes a mobile phone, a watch, a tablet, a computer, and the like. Optionally, the trust relationship may be established by the user, and the user may select a trusted device type of the first electronic device. If the first task is released by a device of the trusted device type of the first electronic device, the first electronic device stores the first task in the local task flow database.

In some embodiments, the preset condition is that the first electronic device receives a user confirmation instruction for the first task. The first electronic device receives the data of the first task, and outputs option information that is for the first task, to prompt the user whether to store the first task in the local task flow database. When the first electronic device receives the user confirmation instruction, that is, the preset condition is met, the first electronic device stores the first task in the local task flow database.

In some embodiments, the first electronic device receives the data of the first task at a first moment, and if the task type of the first task does not meet the preset condition at the first moment, the first electronic device retains the data of the first task until a second moment. If the task type of the first task meets the preset condition at the second moment or before the second moment, the first electronic device stores the first task in the local task flow database when the task type of the first task meets the preset condition. Optionally, a time interval between the first moment and the second moment does not exceed a threshold.

Step S 107: The local task flow database of the first electronic device triggers the task monitoring service, and synchronizes the first task to the super favorites application.

After the distributed database of the first electronic device synchronizes the changed task data (the added data of the first task) to the first electronic device, the first electronic device stores the first task in the local task flow database, and the task flow manager of the first electronic device detects, based on the task monitoring service registered with the local task flow database, that there is changed task data in the local task flow database. The local task flow database sends the changed task data (the added data of the first task) to the task flow manager by using the data callback function, and the task flow manager calls back the changed task data (the added data of the first task) to the super favorites application by using the database management system DBMS. That is, the super favorites application of the first electronic device obtains the data of the first task.

In some embodiments, the super favorites application of the first electronic device obtains the data of the first task, the first electronic device opens the super favorites application, and the user may process the first task in the super favorites application. A processing manner includes, for example, execution, deletion, edition, and modification. For example, refer to some processing functions that are provided for the ask options and that are shown by the super favorites application in FIG. 5a. Each task option corresponds to one task.

The foregoing step S 105 to step S 107 are a process in which the first electronic device calls back the first task to the super favorites application of the first electronic device. The following step S 108 to step S 110 further describe a process in which the second electronic device calls back the first task to the super favorites application of the second electronic device.

Step S 108: The distributed database of the second electronic device sends the changed task data (the data of the first task) to the second electronic device based on a callback function for data change.

Because data in the distributed database of the second electronic device is changed, the distributed database of the second electronic device triggers the callback function for data change, and based on the callback function, the distributed database of the second electronic device sends the changed task data to the local task flow database of the second electronic device, where the changed task data is the added data of the first task.

Optionally, step S 109: The second electronic device receives the data of the first task, and if the task type of the first task meets the preset condition, the second electronic device stores the first task in the local task flow database.

The second electronic device receives the data of the first task, and determines whether the task type of the first task meets a preset condition of the second electronic device. If yes, the second electronic device stores the first task in the local task flow database. If no, the second electronic device filters out the first task.

For specific descriptions of the preset condition of the second electronic device, refer to related descriptions of the preset condition of the first electronic device in step S106. Details are not described herein again.

Step S 110: The local task flow database of the second electronic device triggers the task monitoring service, and synchronizes the first task to the super favorites application.

After the distributed database of the second electronic device sends the changed task data (the data of the first task) to the second electronic device, the second electronic device stores the first task in the local task flow database, and the task flow manager of the second electronic device detects, based on the task monitoring service registered with the local task flow database, that there is changed task data in the local task flow database. The local task flow database sends the changed task data (the added data of the first task) to the task flow manager by using the data callback function, and the task flow manager calls back the changed task data (the added data of the first task) to the super favorites application by using the database management system DBMS.

In some embodiments, the super favorites application of the second electronic device obtains the data of the first task, the second electronic device opens the super favorites application, and the user may process the first task in the super favorites application. A processing manner includes, for example, execution, deletion, edition, and modification.

Based on the foregoing step S105 to step S 110, it can be learned that, when data (the added data of the first task) in the distributed databases is changed, the changed data in the distributed databases is synchronized to the super favorites applications of the first electronic device and the second electronic device. For example, herein, refer to FIG. 6a to FIG. 6c, FIG. 7a, and FIG. 7d. The electronic device 100 is the first electronic device. The electronic device 204 is the second electronic device. FIG. 6a to FIG. 6c show a process in which the user adds the first task (the task corresponding to the task option 711A shown in FIG. 7a) to the super favorites application of the electronic device 100, and the first task (the task corresponding to the task option 741A shown in FIG. 7d) is synchronized in the super favorites application of the electronic device 204 based on the distributed database.

In embodiments of this application, the first electronic device and the second electronic device are in a same distributed database system, and the distributed database system includes the distributed database of the first electronic device and the distributed database of the second electronic device. The first electronic device registers the task monitoring service in the second application, where the task monitoring service is used to monitor a change of the task data in the local task flow database of the first electronic device, and synchronize the change of the task data in the local task flow database of the first electronic device to the second application of the first electronic device. The second electronic device adds the first task to the distributed database of the second electronic device, and the distributed database of the second electronic device synchronizes the first task to the distributed database of the first electronic device. If the task type of the first task meets the preset condition, the first electronic device writes the first task into the local task flow database of the first electronic device. The data in the local task flow database is changed, and then the first electronic device detects, based on the task monitoring service, that the first task is added to the local task flow database of the first electronic device. The first electronic device writes the first task into the second application of the first electronic device. In this way, task synchronization between the first electronic device and the second electronic device is implemented, and whether the first task needs to filtered out for synchronization to the first electronic device is determined based on the preset condition, so that a case in which it is inappropriate for the first electronic device to execute the first task can be avoided.

Optionally, step S111: The second electronic device executes the first task.

After the second electronic device synchronizes the first task to the super favorites application, the second electronic device may process the first task in the super favorites application. The second electronic device receives an instruction for executing the first task (for example, a user operation performed on the task option corresponding to the first task), and then the second electronic device executes the first task. The task data of the first task may include link data, picture data, video data, audio data, file data, text data, character data, and the like. When the task data of the first task includes link data, execution of the first task by the second electronic device is opening a page corresponding to the link data. When the task data of the first task includes video data, execution of the first task by the second electronic device is playing the video data. When the task data of the first task includes picture data, execution of the first task by the second electronic device is displaying the picture data. Other examples are not described.

In some embodiments, after the second electronic device receives the instruction for executing the first task, and before the second electronic device executes the first task, the second electronic device may provide different execution manners of the first task for the user to select. The execution manners include executing the first task with the super favorites application, executing the first task with the task source application, and executing the first task with another application. For example, when the task data of the first task includes video data, an execution manner for the video data includes resuming playing the video data with a source application of the video data, playing the video data with another video playing application, and processing (for example, clipping or editing) the video data with a video processing application. The second electronic device receives an execution manner selected by the user, and the second electronic device executes the first task based on the execution manner. Herein, refer to FIG. 7c. The electronic device 100 is the second electronic device. When the electronic device 100 receives the user operation for executing the first task (the task corresponding to the task option 711A), the electronic device 100 outputs an execution manner selection list 731 for the first task, and provides a plurality of execution manners for processing the first task.

When the second electronic device executes the first task, the second electronic device may directly start an execution application of the first task based on the task option corresponding to the first task in the super favorites application, where the execution application of the first task may be the task source application of the first task, or may be another application.

In some embodiments, the second electronic device executes the first task. If a client (an application) for executing the first task is not installed on the second electronic device, when the second electronic device receives an instruction for executing the first task, the second electronic device outputs prompt information to prompt the user to install the required client.

Optionally, the second electronic device executes the first task. If the client (application) for executing the first task is not installed on the second electronic device, the second electronic device may execute the first task with a web version of the client. For example, the first task is a task from a "Huawei video" application. If the "Huawei video" application is not installed on the first electronic device, the first electronic device may access the "Huawei video" application with a browser and play a video corresponding to the first task.

In some embodiments, the second electronic device executes the first task with the task source application of the first task by default.

In some embodiments, the second electronic device executes the first task based on an interface capability (feature ability, FA). An FA file usually has one or more capabilities of being installation-free, independent running dissociated from an application, cross-device UI migration, and cross-device binary migration. A page file consists of one or more FA files. For example, the first task is a task from the "Huawei video" application. If the "Huawei video" application is not installed on the first electronic device, the first electronic device may obtain a page file by using the FA, to display an application page of the "Huawei video" application, to execute the first task.

Optionally, when the second electronic device runs the FA file, more complex functions in the application can be implemented by sharing an AA logic file of the second electronic device. The AA logic file is usually used to provide support for running the FA file.

In some embodiments, the second electronic device executes the first task, and if the client (application) for executing the first task is not installed on the second electronic device, the second electronic device invokes a device capability of another device on which the application for executing the first task is installed in a network, to execute the first task.

In some embodiments, when executing the first task, a screen of the second electronic device may be split to display interfaces. One screen displays an interface of the super favorites application, and another screen displays an application interface corresponding to execution of the first task. For example, herein, refer to the display form in FIG. 7d. The electronic device 204 is the second electronic device. The left screen 741 of the electronic device 204 is an interface of the super favorites application. The right screen 742 of the electronic device 204 is an application interface for executing the task corresponding to the task option 741A.

Optionally, the following step S 112 to step S 116 describe an example process in which the second electronic device and the first electronic device delete the first task.

Step S 112: The second electronic device deletes the first task from the distributed database.

Specifically, the second electronic device deletes the first task from the distributed database of the second electronic device. The distributed database of the second electronic device synchronizes the deleted first task to the distributed database of the first electronic device.

In some embodiments, the second electronic device receives a deletion operation for the first task, and the second electronic device deletes the first task.

In some embodiments, after the second electronic device executes the first task, the second electronic device automatically deletes the first task. The execution of the first task herein may be start of the execution of the first task, or may be completion of the execution of the first task. For example, when the first task is a mail task, and the second electronic device receives an open operation for the mail task, the second electronic device considers that the execution of the first task is completed; or when the second electronic device receives a reply operation for the mail task, the second electronic device considers that the execution of the first task is completed.

For another example, when the first task is a web page task, and the second electronic device receives an open operation for the web page task, the second electronic device considers that the execution of the first task is completed; or when the second electronic device detects that a web page browsing progress of the web page task is completed, which indicates that the entire web page is browsed, the second electronic device considers that the execution of the first task is completed. Refer to related descriptions in FIG. 4c and FIG. 4d. When the electronic device 100 receives a user operation performed on the task option 407C, the electronic device 100 displays the application interface 430 corresponding to the task option 407C. In this case, the electronic device 100 may delete the task data corresponding to the task option 407C. When the super favorites application is opened again, the task option 407C is deleted.

In some embodiments, after the second electronic device executes the first task, the second electronic device automatically deletes the first task after a preset time period.

In some embodiments, the user may set and modify a deletion manner of each task. The task may be deleted in the following manners. The task may be manually deleted, or may be immediately deleted after task execution, or may be retained for a period of time after execution and then automatically deleted. The task may be deleted in other manners.

In some embodiments, the second electronic device determines a deletion manner of the first task based on task types of different tasks. The task may be manually deleted, or may be immediately deleted after task execution, or may be retained for a period of time after execution and then automatically deleted. The task may be deleted in other manners. Deletion manners of tasks of different task types are different. For example, for an SMS message task, if the SMS message is viewed or replied to by the user, retaining the SMS message task is meaningless. In this case, the SMS message task may be deleted immediately after execution. For a video task, even if the user finishes watching the video, the user may also need to add the video to favorites for repeated watching. Therefore, the user needs to manually delete the video task regardless of whether the execution is completed or not. For a picture task or a web page browsing task, the task may be retained for a preset time period after execution and then automatically deleted.

Optionally, tasks of different task types correspond to different deletion manners. Correspondences may be preset by the user, and the user may modify the correspondences. The correspondences may alternatively be correspondences in the super favorites application of the second electronic device by default.

In some embodiments, the second electronic device determines, based on a page to which the task is saved, the deletion manner corresponding to the task. Refer to related descriptions in FIG. 4b. The page menu 414 includes two page options: the "Process later" option 413A and the "Favorites" option 413B. Each page option corresponds to a page. Tasks may be saved by the user on different pages based on different deletion manners. For example, a task on the "Favorites" page needs to be manually deleted by the user regardless of whether the task is executed or not. For a task on the "Process later" page, the electronic device 100 may automatically delete the task after the electronic device 100 completes the task.

Specifically, the super favorites application of the second electronic device indicates the client of the task flow manager to delete the first task. The client of the task flow manager invokes the interface provided by the database management system DBMS to indicate the task flow manager to delete the first task. The task flow manager module deletes the data of the first task from the distributed database of the second electronic device.

Step S113: The distributed database of the second electronic device synchronizes changed task data (the deleted data of the first task) to the second electronic device based on the callback function for data change.

Because data in the distributed database of the second electronic device is changed, the distributed database of the second electronic device triggers the callback function for data change, and based on the callback function, the distributed database of the second electronic device synchronizes the changed task data to the local task flow database of the second electronic device, where the changed task data is the deleted data of the first task. Optionally, the distributed database of the second electronic device indicates the local task flow database of the second electronic device to delete the data of the first task.

Step S114: The second electronic device deletes the first task.

The local task flow database of the second electronic device deletes the data of the first task. The task flow manager of the first electronic device detects, based on the task monitoring service registered with the local task flow database, that there is changed task data in the local task flow database. The local task flow database synchronizes the changed task data (the deleted data of the first task) to the task flow manager by using the data callback function, and the task flow manager calls back the changed task data (the deleted data of the first task) to the super favorites application by using the database management system DBMS. The data of the first task is deleted from the super favorites application of the second electronic device.

Step S115: The distributed database of the first electronic device synchronizes the changed task data (the deleted data of the first task) to the first electronic device based on the callback function for data change.

Because data in the distributed database of the first electronic device is changed, the distributed database of the first electronic device triggers the callback function for data change, and based on the callback function, the distributed database of the first electronic device synchronizes the changed task data to the local task flow database of the first electronic device, where the changed task data is the deleted data of the first task. Optionally, the distributed database of the first electronic device indicates the local task flow database of the first electronic device to delete the data of the first task.

Step S 116: The first electronic device deletes the first task.

The local task flow database of the first electronic device deletes the data of the first task. The task flow manager of the first electronic device detects, based on the task monitoring service registered with the local task flow database, that there is changed task data in the local task flow database. The local task flow database synchronizes the changed task data (the deleted data of the first task) to the task flow manager by using the data callback function, and the task flow manager calls back the changed task data (the deleted data of the first task) to the super favorites application by using the database management system DBMS. The data of the first task is deleted from the super favorites application of the first electronic device.

Based on the foregoing step S 113 to step S 116, it can be learned that, when data (the deleted data of the first task) in the distributed databases is changed, the changed data in the distributed databases is synchronized to the super favorites applications of the first electronic device and the second electronic device.

It should be noted that the task synchronization method provided in embodiments of this application may include more or fewer steps than the foregoing step S 101 to step S 116, or some steps may be combined, or some steps may be split, or some steps may be added, or different step implementations are used.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art may understand that all or some of the procedures of the methods in the embodiments may be implemented by a computer program instructing related hardware. The program may be stored in a computer-readable storage medium. When the program is run, the procedures of the method embodiments may be performed. The foregoing storage medium includes any medium that can store program code, for example, a ROM, a random access memory RAM, a magnetic disk, or an optical disc.

## Claims

1. A task synchronization system, comprising a first electronic device and a second electronic device, wherein
the first electronic device is configured to:
display a first interface of a first application;
receive a first user operation performed in the first interface; and
generate a first task in response to the first user operation; and
the second electronic device is configured to:
obtain the first task;
display, in a second application of the second electronic device, a first task option corresponding to the first task, wherein the second application and the first application are different applications; and
display the first interface of the first application when receiving a second user operation performed on the first task option.

2. The system according to claim 1, wherein the second electronic device is further configured to: before displaying, in the second application of the second electronic device, the first task option corresponding to the first task, detect that the first task meets a first preset condition.

3. The system according to claim 1, wherein the first electronic device is further configured to:
display, in the second application of the first electronic device, the first task option corresponding to the first task; and
display the first interface of the first application when receiving a third user operation performed on the first task option.

4. The system according to claim 1, wherein the first electronic device and the second electronic device are in a same distributed database system, and the distributed database system comprises a distributed database of the first electronic device and a distributed database of the second electronic device; and the first electronic device is further configured to:
after generating the first task, add the first task to the distributed database of the first electronic device; and
synchronize the added first task to the distributed database of the second electronic device based on the distributed database of the first electronic device.

5. The system according to claim 1, wherein the first electronic device communicates with the second electronic device through a third electronic device;
the first electronic device is further configured to: after generating the first task, upload the first task to the third electronic device; and
the third electronic device is configured to synchronize the first task to the second electronic device.

6. The system according to claim 1, wherein the first electronic device is further configured to:
receive a notification message of a third application; and
generate a second task based on the notification message; and
the second electronic device is further configured to:
obtain the second task;
display, in the second application of the second electronic device, a second task option corresponding to the second task; and
display an interface corresponding to the notification message when receiving a fourth user operation performed on the second task option.

7. The system according to claim 1, wherein the second electronic device is further configured to: delete the first task, and delete, from the second application of the second electronic device, the first task option corresponding to the first task; and
the first electronic device is further configured to: after the second electronic device deletes the first task, delete the first task, and delete, from the second application of the first electronic device, the first task option corresponding to the first task.

8. A task synchronization method, applied to a first electronic device, wherein the method comprises:
displaying a first interface of a first application;
receiving a first user operation performed in the first interface;
generating a first task in response to the first user operation, wherein the first task is used to display a corresponding first task option in a second application, the first task option is used to trigger display of the first interface of the first application, and the second application and the first application are different applications; and
synchronizing the first task to a second electronic device.

9. The method according to claim 8, wherein the method further comprises:
displaying, in the second application of the first electronic device, the first task option corresponding to the first task; and
displaying the first interface of the first application when receiving a user operation performed on the first task option.

10. The method according to claim 9, wherein before the displaying, in the second application of the first electronic device, the first task option corresponding to the first task, the method further comprises:
detecting that the first task meets a second preset condition.

11. The method according to claim 8, wherein the first electronic device and the second electronic device are in a same distributed database system, and the distributed database system comprises a distributed database of the first electronic device and a distributed database of the second electronic device; and the synchronizing the first task to a second electronic device comprises:
adding the first task to the distributed database of the first electronic device; and
synchronizing the added first task to the distributed database of the second electronic device based on the distributed database of the first electronic device.

12. The method according to claim 8, wherein the first electronic device communicates with the second electronic device through a third electronic device; and the synchronizing the first task to a second electronic device comprises:
uploading the first task to the third electronic device; and
synchronizing the first task to the second electronic device based on the third electronic device.

13. The method according to claim 8, wherein the method further comprises:
receiving a notification message of a third application;
generating a second task based on the notification message, wherein the second task is used to display a corresponding second task option in the second application, and the second task option is used to trigger display of an interface corresponding to the notification message; and
synchronizing the second task to the second electronic device.

14. The method according to claim 10, wherein the second preset condition comprises one or more of the following:
a task type of the first task matches a device capability of the first electronic device;
an execution application of the first task matches an application already installed on the first electronic device;
a task resource application of the first task matches an application already installed on the first electronic device;
a security attribute of the first task matches a device type of the first electronic device;
the first electronic device receives a user confirmation instruction for the first task;
a trust relationship exists between the task type of the first task and the first electronic device; and
a trust relationship exists between a task source device of the first task and the first electronic device.

15. The method according to claim 9, wherein after the displaying the first interface of the first application when receiving a user operation performed on the first task option, the method further comprises: deleting the first task.

16. The method according to claim 11, wherein the method further comprises:
deleting the first task from the distributed database of the first electronic device; and
synchronizing the deleted first task to the distributed database of the second electronic device based on the distributed database of the first electronic device.

17. A task synchronization method, applied to a second electronic device, wherein the method comprises:
obtaining a first task, wherein the first task is generated by a first electronic device based on a first interface of a first application;
displaying, in a second application of the second electronic device, a first task option corresponding to the first task, wherein the second application and the first application are different applications; and
displaying the first interface of the first application when receiving a second user operation performed on the first task option.

18. The method according to claim 17, wherein before the displaying, in a second application of the second electronic device, a first task option corresponding to the first task, the method further comprises:
detecting that the first task meets a first preset condition.

19. The method according to claim 18, wherein the first preset condition comprises one or more of the following:
a task type of the first task matches a device capability of the second electronic device;
an execution application of the first task matches an application already installed on the second electronic device;
a task resource application of the first task matches an application already installed on the second electronic device;
a security attribute of the first task matches a device type of the second electronic device;
the first electronic device receives a user confirmation instruction for the first task;
a trust relationship exists between the task type of the first task and the second electronic device; and
a trust relationship exists between a task source device of the first task and the second electronic device.

20. The method according to claim 17, wherein the first electronic device and the second electronic device are in a same distributed database system, and the distributed database system comprises a distributed database of the first electronic device and a distributed database of the second electronic device; and the obtaining a first task comprises:
synchronizing the first task to the distributed database of the second electronic device based on the distributed database of the first electronic device, wherein the first task is added to the distributed database of the first electronic device after the first electronic device generates the first task.

21. The method according to claim 17, wherein the first electronic device communicates with the second electronic device through a third electronic device; and the obtaining a first task comprises:
obtaining the first task based on the third electronic device, wherein the third electronic device is configured to synchronize the first task obtained from the first electronic device to the second electronic device.

22. The method according to any one of claims 17 to 21, wherein a task monitoring service is registered in the second application of the second electronic device, and the task monitoring service is used to: monitor a change of task data in a local task flow database of the second electronic device, and synchronize the change of the task data in the local task flow database of the second electronic device to the second application of the second electronic device; and
if the first task meets the first preset condition, the displaying, in a second application of the second electronic device, a first task option corresponding to the first task comprises:
if the first task meets the first preset condition, storing, by the second electronic device, the first task into a local task flow database of the first electronic device;
detecting, based on the task monitoring service, that the first task is written into the local task flow database of the second electronic device; and
writing the first task into the second application of the first electronic device, and displaying, in the second application of the second electronic device, the first task option corresponding to the first task.

23. The method according to claim 17, wherein after the displaying the first interface of the first application when receiving a second user operation performed on the first task option, the method further comprises: deleting the first task.

24. The method according to claim 20, wherein the method further comprises:
deleting the first task from the distributed database of the second electronic device; and
synchronizing the deleted first task to the distributed database of the first electronic device based on the distributed database of the second electronic device.

25. An electronic device, comprising one or more processors and one or more memories, wherein the one or more memories are respectively coupled to the one or more processors, the one or more memories are configured to store computer program code, the computer program code comprises computer instructions, and when the computer instructions are run on the processor, the electronic device is enabled to perform the method according to claims 8 to 24.

26. A computer-readable medium, configured to store one or more programs, wherein the one or more programs are configured to be executed by the one or more processors, the one or more programs comprise instructions, and the instructions are used to perform the method according to claims 8 to 24.
